# EUROPEAN PATENT SPECIFICATION

(11) **EP 3 697 134 B1**
(45) Date of publication and mention of the grant of the patent: **26.10.2022**
(21) Application number: 18874656.4
(22) Date of filing: 30.10.2018
(51) Int. Cl.: H04W 48/16, H04W 48/10, H04W 52/02, H04W 84/12

(54) **METHOD FOR TRANSMITTING OR RECEIVING FRAME IN WIRELESS LAN SYSTEM AND APPARATUS THEREFOR**
VERFAHREN ZUM SENDEN ODER EMPFANGEN EINES RAHMENS IN EINEM WLAN-SYSTEM UND VORRICHTUNG DAFÜR
PROCÉDÉ DE TRANSMISSION OU DE RÉCEPTION DE TRAME DANS UN SYSTÈME LAN SANS FIL ET APPAREIL CORRESPONDANT

(30) Priority: 30.10.2017 US 201762579098 P; 25.01.2018 US 201862622124 P; 25.01.2018 US 201862622125 P
(43) Date of publication of application: 19.08.2020
(73) Proprietor: LG Electronics Inc., Seoul 07336 (KR)
(72) Inventor: SONG, Taewon, Seoul 06772 (KR); KIM, Suhwook, Seoul 06772 (KR); KIM, Jeongki, Seoul 06772 (KR); RYU, Kiseon, Seoul 06772 (KR); CHOI, Jinsoo, Seoul 06772 (KR)
(74) Representative: Mooser, Sebastian Thomas
(86) International application number: PCT/KR2018/012995
(87) International publication number: WO 2019/088645

(56) References cited:
- EP-A1- 2 884 804
- KR-A- 20130 125 338
- KR-A- 20140 131 585
- US-A1- 2015 245 377
- ALFRED ASTERJADHI (QUALCOMM INC): "Considerations on WUR frame format", IEEE DRAFT; 11-17-1004-01-00BA-CONSIDERATIONS-ON-WUR-F RAME-FORMAT, IEEE-SA MENTOR, PISCATAWAY, NJ USA , vol. 802.11ba, no. 1 11 September 2017 (2017-09-11), pages 1-19, XP068116422, Retrieved from the Internet: URL:https://mentor.ieee.org/802.11/dcn/17/ 11-17-1004-01-00ba-considerations-on-wur-f rame-format.pptx [retrieved on 2017-09-11]
- LAN/WAN STANDARD COMMITTEE OF THE IEEE COMPUTER SOCIETY: "Draft Standard for Information technology- Tele- communications and information exchange between systems Local and metropolitan area networks- Specific requirements ? ? Part 11: Wireless LAN Medium Access Control ? (MAC) and Physical Layer (PHY) Specifications ? ? Amendment 9: Wake-Up Radio Operatio", IEEE DRAFT; DRAFT P802.11BA D0.3, IEEE-SA, PISCATAWAY, NJ USA , vol. 802.11ba drafts, no. D0.3 29 May 2018 (2018-05-29), pages 1-70, XP068137634, Retrieved from the Internet: URL:www.ieee802.org/11/private/Draft_Stand ards/11ba/Draft P802.11ba D0.3.pdf [retrieved on 2018-05-29]
- GUOQING LI (APPLE): "text update for WUR discovery frame", IEEE DRAFT; 11-18-0748-00-00BA-TEXT-UPDATE-FOR-WUR-DIS COVERY-FRAME, IEEE-SA MENTOR, PISCATAWAY, NJ USA , vol. 802.11ba 4 May 2018 (2018-05-04), pages 1-2, XP068125860, Retrieved from the Internet: URL:https://mentor.ieee.org/802.11/dcn/18/ 11-18-0748-00-00ba-text-update-for-wur-dis covery-frame.docx [retrieved on 2018-05-04]
- XIAOFEI WANG: "Power Efficient WUR AP Discovery - A Follow Up", IEEE 802.11-17/0042r0, 16 January 2017 (2017-01-16), XP068112440,
- IGOR KIM: "AP Discovery using WUR", IEEE 802.11-16/1501r0, 8 November 2016 (2016-11-08), XP068110936,

## Description

### TECHNICAL FIELD

The present disclosure relates to a wireless local area network system and, more particularly, to a method of transmitting or receiving frame through a Wake-Up Radio (WUR) and an apparatus therefor.

### BACKGROUND ART

Standards for Wireless Local Area Network (WLAN) technology have been developed as Institute of Electrical and Electronics Engineers (IEEE) 802.11 standards. IEEE 802.11a and b use an unlicensed band at 2.4 GHz or 5 GHz. IEEE 802.11b provides a transmission rate of 11 Mbps and IEEE 802.11a provides a transmission rate of 54 Mbps. IEEE 802.11g provides a transmission rate of 54 Mbps by applying Orthogonal Frequency Division Multiplexing (OFDM) at 2.4 GHz. IEEE 802.11n provides a transmission rate of 300 Mbps for four spatial streams by applying Multiple Input Multiple Output (MIMO)-OFDM. IEEE 802.11n supports a channel bandwidth of up to 40 MHz and, in this case, provides a transmission rate of 600 Mbps.

The above-described WLAN standards have evolved into IEEE 802.11ac that uses a bandwidth of up to 160 MHz and supports a transmission rate of up to 1 Gbits/s for 8 spatial streams and IEEE 802.11ax standards are under discussion.

The document ("Considerations on WUR frame format", IEEE DRAFT) outlines a WUR frame format. In the document the WUR frame format is proposed to provide flexibility to cover a wide range of scenarios, have short sizes between 6B-13B MPDU lengths, allow unicast, multicast and broadcast addressing, and provide security and signaling for a wide range of applications.

EP 2 884 804 A1 discloses a method and a device for updating system information in a wireless LAN system. In the document the method for updating system information in a station (STA) of a wireless communication system is described to comprise transmitting, by the STA which stores system information and a configuration change count value of a previously linked preferred access point (AP), a probe request frame for active scanning to the preferred AP, and receiving a probe response frame from the preferred AP, wherein the probe request frame includes a configuration change count field previously acquired from the preferred AP, and if a value of the configuration change count field included in the probe request frame is different from a present configuration change count value of the preferred AP, the probe response frame can include one or more elements of system information which should be updated by the STA.

### DETAILED DESCRIPTION OF THE DISCLOSURE

### Technical Problems

An object of the present disclosure is to provide a method of transmitting or receiving a WUR frame to support Access Point (AP) discovery of a station (STA) operating in a WUR mode, and an apparatus therefor.

The present disclosure is not limited to the above-described object and other objects may be inferred from embodiments of the present disclosure.

### Technical Solutions

Preferred embodiments of the present disclosure are provided as defined in the appended claims, by which the protection scope is to be set. The invention is defined by the appended claims.

### Advantageous Effects

According to an embodiment of the present disclosure, information related to a BSSID of an AP, information related to an SSID, and information related to a PCR operating channel are provided through a WUR frame so that an STA operating in a WUR mode may more efficiently and quickly perform AP discovery.

Other technical effects in addition to the above-described effects may be inferred from embodiments of the present disclosure.

### Description of Drawings

FIG. 1 illustrates an example of a configuration of a wireless LAN system.
FIG. 2 illustrates another example of a configuration of a wireless LAN system.
FIG. 3 illustrates a general link setup procedure.
FIG. 4 illustrates a backoff procedure.
FIG. 5 is an explanatory diagram of a hidden node and an exposed node.
FIG. 6 is an explanatory diagram of RTS and CTS.
FIGS.7 to 9 are explanatory diagrams of operation of an STA that has received TIM.
FIG. 10 is an explanatory diagram of an exemplary frame structure used in an IEEE 802.11 system.
FIG. 11 is an explanatory diagram of a WUR receiver usable in a WLAN system (e.g., 802.11).
FIG. 12 is an explanatory diagram of operation of a WUR receiver.
FIG. 13 illustrates an example of a WUR packet.
FIG. 14 illustrates the waveform of a WUR packet.
FIG. 15 is an explanatory diagram of a WUR packet generated using an OFDM transmitter of a WLAN.
FIG. 16 illustrates the structure of a WUR receiver.
FIG. 17 illustrates an example of a general WUR frame.
FIG. 18 illustrates the structure of a WUR frame according to an embodiment of the present disclosure.
FIG. 19 illustrates the structure of a WUR frame according to another embodiment of the present disclosure.
FIG. 20 illustrates an example of a capability information field
FIG. 21 illustrates an example of channel switch announcement information.
FIG. 22 illustrates an example of BSS load information.
FIG. 23 illustrates an example of supported rate information.
FIG. 24 illustrates an example of a partial BSSID.

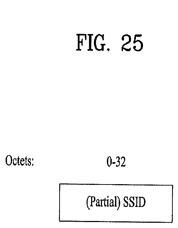

FIG. 25 illustrates an example of a partial SSID.
FIG. 26 illustrates an example of a connection table stored in an STA.
FIG. 27 illustrates an example of a WUR beacon frame for AP scanning/discovery.
FIG. 28 illustrates an example of a WUR broadcast frame for AP scanning/discovery.
FIG. 29 illustrates an association process of an STA with a specific AP through active scanning of legacy 802.11
FIG. 30 illustrates a PCR active scanning method based on a WUR frame for AP scanning/discovery according to an embodiment of the present disclosure.
FIG. 31 illustrates a passive scanning procedure using a WUR frame proposed above.
FIG. 32 illustrates a WUR discovery frame format according to an embodiment of the present disclosure.
FIG. 33 illustrates an example of a CL WUR discovery frame.
FIG. 34 illustrates a 5 GHz spectrum and another example of the CL WUR discovery frame.
FIG. 35 illustrates an example of a VL WUR discovery frame.
FIG. 36 illustrates a WUR discovery frame according to an embodiment of the present disclosure.
FIG. 37 is an explanatory diagram of generation of a compressed SSID according to a parity method.
FIG. 38 is an explanatory diagram of generation of a compressed SSID according to a method of extracting bits per character.
FIG. 39 is an explanatory diagram of generation of a compressed SSID according to a method of extracting bits in descending/ascending order.
FIG. 40 illustrates an example of a WUR discovery procedure between an AP, a BSS, and an ESS using an SSID compression scheme.
FIG. 41 illustrates a flow of a WUR frame transmission method according to an embodiment of the present disclosure.
FIG. 42 is an explanatory diagram of an apparatus according to an embodiment of the present disclosure.

### BEST MODE FOR CARRYING OUT THE DISCLOSURE

Reference will now be made in detail to the exemplary embodiments of the present disclosure, examples of which are illustrated in the accompanying drawings. The detailed description, which will be given below with reference to the accompanying drawings, is intended to explain exemplary embodiments of the present disclosure, rather than to show the only embodiments that can be implemented according to the present disclosure.

A way to carry out the claimed invention is disclosed by "Proposal 1". All other examples, proposals or embodiments do not fall under the claims and represent background information useful to understand the claimed invention.

The following detailed description includes specific details in order to provide a thorough understanding of the present disclosure. However, it will be apparent to those skilled in the art that the present disclosure may be practiced without such specific details. In some instances, known structures and devices are omitted or are shown in block diagram form, focusing on important features of the structures and devices, so as not to obscure the concept of the present disclosure.

As described before, the following description is given of a method and apparatus for increasing a spatial reuse rate in a Wireless Local Area Network (WLAN) system. To do so, a WLAN system to which the present disclosure is applied will first be described in detail.

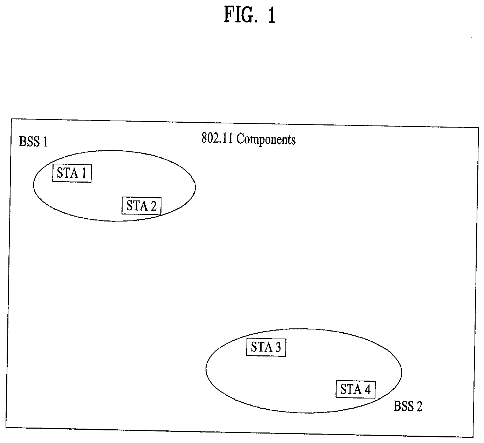

FIG. 1 is a diagram illustrating an exemplary configuration of a WLAN system.

As illustrated in FIG. 1, the WLAN system includes at least one Basic Service Set (BSS). The BSS is a set of STAs that are able to communicate with each other by successfully performing synchronization.

An STA is a logical entity including a physical layer interface between a Media Access Control (MAC) layer and a wireless medium. The STA may include an AP and a non-AP STA. Among STAs, a portable terminal manipulated by a user is the non-AP STA. If a terminal is simply called an STA, the STA refers to the non-AP STA. The non-AP STA may also be referred to as a terminal, a Wireless Transmit/Receive Unit (WTRU), a User Equipment (UE), a Mobile Station (MS), a mobile terminal, or a mobile subscriber unit.

The AP is an entity that provides access to a Distribution System (DS) to an associated STA through a wireless medium. The AP may also be referred to as a centralized controller, a Base Station (BS), a Node-B, a Base Transceiver System (BTS), or a site controller.

The BSS may be divided into an infrastructure BSS and an Independent BSS (IBSS).

The BSS illustrated in FIG. 1 is the IBSS. The IBSS refers to a BSS that does not include an AP. Since the IBSS does not include the AP, the IBSS is not allowed to access to the DS and thus forms a self-contained network.

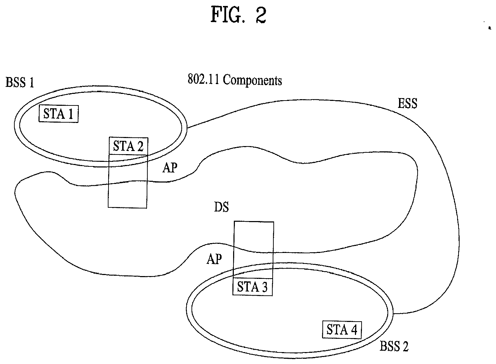

FIG. 2 is a diagram illustrating another exemplary configuration of a WLAN system.

BSSs illustrated in FIG. 2 are infrastructure BSSs. Each infrastructure BSS includes one or more STAs and one or more APs. In the infrastructure BSS, communication between non-AP STAs is basically conducted via an AP. However, if a direct link is established between the non-AP STAs, direct communication between the non-AP STAs may be performed.

As illustrated in FIG. 2, the multiple infrastructure BSSs may be interconnected via a DS. The BSSs interconnected via the DS are called an Extended Service Set (ESS). STAs included in the ESS may communicate with each other and a non-AP STA within the same ESS may move from one BSS to another BSS while seamlessly performing communication.

The DS is a mechanism that connects a plurality of APs to one another. The DS is not necessarily a network. As long as it provides a distribution service, the DS is not limited to any specific form. For example, the DS may be a wireless network such as a mesh network or may be a physical structure that connects APs to one another.

### Layer Architecture

An operation of an STA in a WLAN system may be described from the perspective of a layer architecture. A processor may implement the layer architecture in terms of device configuration. The STA may have a plurality of layers. For example, the 802.11 standards mainly deal with a MAC sublayer and a PHY layer on a Data Link Layer (DLL). The PHY layer may include a Physical Layer Convergence Protocol (PLCP) entity, a Physical Medium Dependent (PMD) entity, and the like. Each of the MAC sublayer and the PHY layer conceptually includes management entities called MAC sublayer Management Entity (MLME) and Physical Layer Management Entity (PLME). These entities provide layer management service interfaces through which a layer management function is executed.

To provide a correct MAC operation, a Station Management Entity (SME) resides in each STA. The SME is a layer independent entity which may be perceived as being present in a separate management plane or as being off to the side. While specific functions of the SME are not described in detail herein, the SME may be responsible for collecting layer-dependent states from various Layer Management Entities (LMEs) and setting layer-specific parameters to similar values. The SME may execute these functions and implement a standard management protocol on behalf of general system management entities.

The above-described entities interact with one another in various manners. For example, the entities may interact with one another by exchanging GET/SET primitives between them. A primitive refers to a set of elements or parameters related to a specific purpose. An XX-GET.request primitive is used to request a predetermined MIB attribute value (management information-based attribute information). An XX-GET.confirm primitive is used to return an appropriate MIB attribute information value when the Status field indicates "Success" and to return an error indication in the Status field when the Status field does not indicate "Success". An XX-SET.request primitive is used to request setting of an indicated MIB attribute to a predetermined value. When the MIB attribute indicates a specific operation, the MIB attribute requests the specific operation to be performed. An XX-SET.confirm primitive is used to confirm that the indicated MIB attribute has been set to a requested value when the Status field indicates "Success" and to return an error condition in the Status field when the Status field does not indicate "Success". When the MIB attribute indicates a specific operation, it confirms that the operation has been performed.

Also, the MLME and the SME may exchange various MLME_GET/SET primitives through an MLME Service Access Point (MLME_SAP). In addition, various PLME_GET/SET primitives may be exchanged between the PLME and the SME through a PLME_SAP, and exchanged between the MLME and the PLME through an MLME-PLME_SAP.

### Link Setup Process

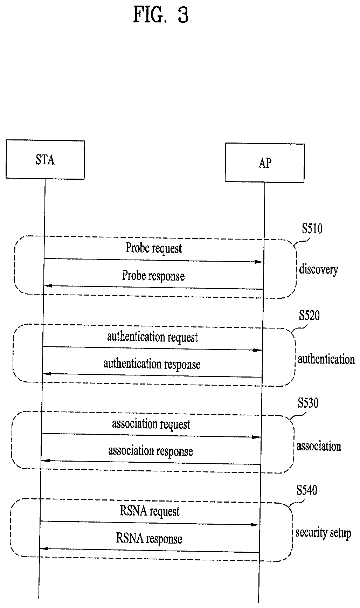

FIG. 3 is a flowchart explaining a general link setup process according to an exemplary embodiment of the present disclosure.

In order to allow an STA to establish link setup on the network as well as to transmit/receive data over the network, the STA must perform such link setup through processes of network discovery, authentication, and association, and must establish association and perform security authentication. The link setup process may also be referred to as a session initiation process or a session setup process. In addition, an association step is a generic term for discovery, authentication, association, and security setup steps of the link setup process.

Link setup process is described referring to FIG. 3.

In step S510, STA may perform the network discovery action. The network discovery action may include the STA scanning action. That is, STA must search for an available network so as to access the network. The STA must identify a compatible network before participating in a wireless network. Here, the process for identifying the network contained in a specific region is referred to as a scanning process.

The scanning scheme is classified into active scanning and passive scanning.

FIG. 3 is a flowchart illustrating a network discovery action including an active scanning process. In the case of the active scanning, an STA configured to perform scanning transmits a probe request frame and waits for a response to the probe request frame, such that the STA can move between channels and at the same time can determine which Access Point (AP) is present in a peripheral region. A responder transmits a probe response frame, acting as a response to the probe request frame, to the STA having transmitted the probe request frame. In this case, the responder may be an STA that has finally transmitted a beacon frame in a BSS of the scanned channel. In BSS, since the AP transmits the beacon frame, the AP operates as a responder. In IBSS, since STAs of the IBSS sequentially transmit the beacon frame, the responder is not constant. For example, the STA, that has transmitted the probe request frame at Channel #1 and has received the probe response frame at Channel #1, stores BSS-associated information contained in the received probe response frame, and moves to the next channel (for example, Channel #2), such that the STA may perform scanning using the same method (i.e., probe request/response transmission/reception at Channel #2).

Although not shown in FIG. 3, the scanning action may also be carried out using passive scanning. AN STA configured to perform scanning in the passive scanning mode waits for a beacon frame while simultaneously moving from one channel to another channel. The beacon frame is one of management frames in IEEE 802.11, indicates the presence of a wireless network, enables the STA performing scanning to search for the wireless network, and is periodically transmitted in a manner that the STA can participate in the wireless network. In BSS, the AP is configured to periodically transmit the beacon frame. In IBSS, STAs of the IBSS are configured to sequentially transmit the beacon frame. If each STA for scanning receives the beacon frame, the STA stores BSS information contained in the beacon frame, and moves to another channel and records beacon frame information at each channel. The STA having received the beacon frame stores BSS-associated information contained in the received beacon frame, moves to the next channel, and thus performs scanning using the same method.

In comparison between the active scanning and the passive scanning, the active scanning is more advantageous than the passive scanning in terms of delay and power consumption.

After the STA discovers the network, the STA may perform the authentication process in step S520. The authentication process may be referred to as a first authentication process in such a manner that the authentication process can be clearly distinguished from the security setup process of step S540.

The authentication process may include transmitting an authentication request frame to an AP by the STA, and transmitting an authentication response frame to the STA by the AP in response to the authentication request frame. The authentication frame used for authentication request/response may correspond to a management frame.

The authentication frame may include an authentication algorithm number, an authentication transaction sequence number, a state code, a challenge text, a Robust Security Network (RSN), a Finite Cyclic Group (FCG), etc. The above-mentioned information contained in the authentication frame may correspond to some parts of information capable of being contained in the authentication request/response frame, may be replaced with other information, or may include additional information.

The STA may transmit the authentication request frame to the AP. The AP may decide whether to authenticate the corresponding STA on the basis of information contained in the received authentication request frame. The AP may provide the authentication result to the STA through the authentication response frame.

After the STA has been successfully authenticated, the association process may be carried out in step S530. The association process may involve transmitting an association request frame to the AP by the STA, and transmitting an association response frame to the STA by the AP in response to the association request frame.

For example, the association request frame may include information associated with various capabilities, a beacon listen interval, a Service Set Identifier (SSID), supported rates, supported channels, RSN, mobility domain, supported operating classes, a TIM (Traffic Indication Map) broadcast request, interworking service capability, etc.

For example, the association response frame may include information associated with various capabilities, a state code, an Association ID (AID), supported rates, an Enhanced Distributed Channel Access (EDCA) parameter set, a Received Channel Power Indicator (RCPI), a Received Signal to Noise Indicator (RSNI), mobility domain, a timeout interval (association comeback time), an overlapping BSS scan parameter, a TIM broadcast response, a Quality of Service (QoS) map, etc.

The above-mentioned information may correspond to some parts of information capable of being contained in the association request/response frame, may be replaced with other information, or may include additional information.

After the STA has been successfully associated with the network, a security setup process may be carried out in step S540. The security setup process of Step S540 may be referred to as an authentication process based on Robust Security Network Association (RSNA) request/response. The authentication process of step S520 may be referred to as a first authentication process, and the security setup process of Step S540 may also be simply referred to as an authentication process.

For example, the security setup process of Step S540 may include a private key setup process through 4-way handshaking based on an Extensible Authentication Protocol over LAN (EAPOL) frame. In addition, the security setup process may also be carried out according to other security schemes not defined in IEEE 802.11 standards.

### Medium Access Mechanism

In the IEEE 802.11 - based WLAN system, a basic access mechanism of Medium Access Control (MAC) is a Carrier Sense Multiple Access with Collision Avoidance (CSMA/CA) mechanism. The CSMA/CA mechanism is referred to as a Distributed Coordination Function (DCF) of IEEE 802.11 MAC, and basically includes a "Listen Before Talk" access mechanism. In accordance with the above-mentioned access mechanism, the AP and/or STA may perform Clear Channel Assessment (CCA) for sensing an RF channel or medium during a predetermined time interval [for example, DCF Inter-Frame Space (DIFS)], prior to data transmission. If it is determined that the medium is in the idle state, frame transmission through the corresponding medium begins. On the other hand, if it is determined that the medium is in the occupied state, the corresponding AP and/or STA does not start its own transmission, establishes a delay time (for example, a random backoff period) for medium access, and attempts to start frame transmission after waiting for a predetermined time. Through application of a random backoff period, it is expected that multiple STAs will attempt to start frame transmission after waiting for different times, resulting in minimum collision.

In addition, IEEE 802.11 MAC protocol provides a Hybrid Coordination Function (HCF). HCF is based on DCF and Point Coordination Function (PCF). PCF refers to the polling-based synchronous access scheme in which periodic polling is executed in a manner that all reception (Rx) APs and/or STAs can receive the data frame. In addition, HCF includes Enhanced Distributed Channel Access (EDCA) and HCF Controlled Channel Access (HCCA). EDCA is achieved when the access scheme provided from a provider to a plurality of users is contention-based. HCCA is achieved by the contention-free-based channel access scheme based on the polling mechanism. In addition, HCF includes a medium access mechanism for improving Quality of Service (QoS) of WLAN, and may transmit QoS data in both a Contention Period (CP) and a Contention Free Period (CFP).

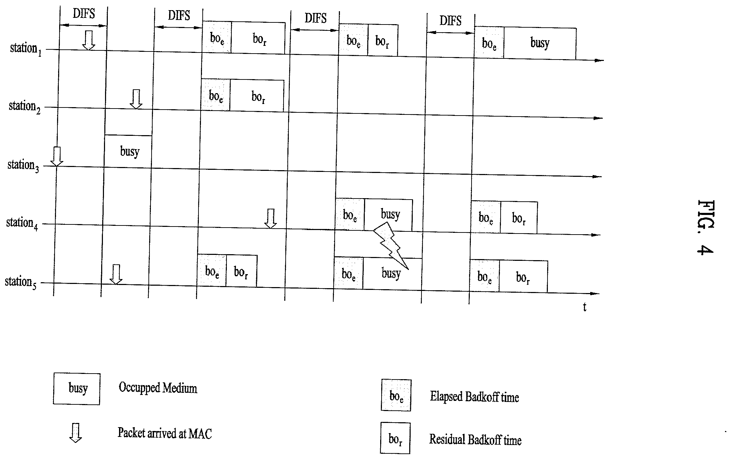

FIG. 4 is a conceptual diagram illustrating a backoff process.

Operations based on a random backoff period will hereinafter be described with reference to FIG. 4. If the occupy- or busy- state medium is shifted to an idle state, several STAs may attempt to transmit data (or frame). As a method for implementing a minimum number of collisions, each STA selects a random backoff count, waits for a slot time corresponding to the selected backoff count, and then attempts to start data transmission. The random backoff count has a value of a Packet Number (PN), and may be set to one of 0 to CW values. In this case, CW refers to a Contention Window parameter value. Although an initial value of the CW parameter is denoted by CWmin, the initial value may be doubled in case of a transmission failure (for example, in the case in which ACK of the transmission frame is not received). If the CW parameter value is denoted by CWmax, CWmax is maintained until data transmission is successful, and at the same time it is possible to attempt to start data transmission. If data transmission was successful, the CW parameter value is reset to CWmin. Preferably, CW, CWmin, and CWmax are set to 2n-1 (where n=0, 1, 2, ...).

If the random backoff process starts operation, the STA continuously monitors the medium while counting down the backoff slot in response to the decided backoff count value. If the medium is monitored as the occupied state, the countdown stops and waits for a predetermined time. If the medium is in the idle state, the remaining countdown restarts.

As shown in the example of FIG. 4, if a packet to be transmitted to MAC of STA3 arrives at the STA3, the STA3 determines whether the medium is in the idle state during the DIFS, and may directly start frame transmission. In the meantime, the remaining STAs monitor whether the medium is in the busy state, and wait for a predetermined time. During the predetermined time, data to be transmitted may occur in each of STA1, STA2, and STA5. If the medium is in the idle state, each STA waits for the DIFS time and then performs countdown of the backoff slot in response to a random backoff count value selected by each STA. The example of FIG. 4 shows that STA2 selects the lowest backoff count value and STA1 selects the highest backoff count value. That is, after STA2 finishes backoff counting, the residual backoff time of STA5 at a frame transmission start time is shorter than the residual backoff time of STA1. Each of STA1 and STA5 temporarily stops countdown while STA2 occupies the medium, and waits for a predetermined time. If occupying of the STA2 is finished and the medium re-enters the idle state, each of STA1 and STA5 waits for a predetermined time DIFS, and restarts backoff counting. That is, after the remaining backoff slot as long as the residual backoff time is counted down, frame transmission may start operation. Since the residual backoff time of STA5 is shorter than that of STA1, STA5 starts frame transmission. Meanwhile, data to be transmitted may occur in STA4 while STA2 occupies the medium. In this case, if the medium is in the idle state, STA4 waits for the DIFS time, performs countdown in response to the random backoff count value selected by the STA4, and then starts frame transmission. FIG. 4 exemplarily shows the case in which the residual backoff time of STA5 is identical to the random backoff count value of STA4 by chance. In this case, an unexpected collision may occur between STA4 and STA5. If the collision occurs between STA4 and STA5, each of STA4 and STA5 does not receive ACK, resulting in the occurrence of a failure in data transmission. In this case, each of STA4 and STA5 increases the CW value two times, and STA4 or STA5 may select a random backoff count value and then perform countdown. Meanwhile, STA1 waits for a predetermined time while the medium is in the occupied state due to transmission of STA4 and STA5. In this case, if the medium is in the idle state, STA1 waits for the DIFS time, and then starts frame transmission after lapse of the residual backoff time.

### STA Sensing Operation

As described above, the CSMA/CA mechanism includes not only a physical carrier sensing mechanism in which the AP and/or STA can directly sense the medium, but also a virtual carrier sensing mechanism. The virtual carrier sensing mechanism can solve some problems (such as a hidden node problem) encountered in the medium access. For the virtual carrier sensing, MAC of the WLAN system can utilize a Network Allocation Vector (NAV). In more detail, by means of the NAV value, the AP and/or STA, each of which currently uses the medium or has authority to use the medium, may inform another AP and/or another STA for the remaining time in which the medium is available. Accordingly, the NAV value may correspond to a reserved time in which the medium will be used by the AP and/or STA configured to transmit the corresponding frame. AN STA having received the NAV value may prohibit medium access (or channel access) during the corresponding reserved time. For example, NAV may be set according to the value of a 'duration' field of the MAC header of the frame.

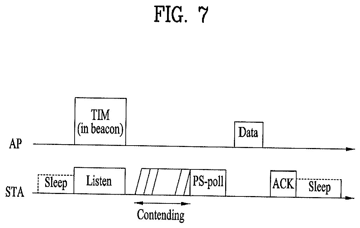

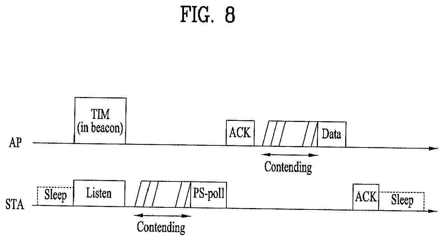

The robust collision detect mechanism has been proposed to reduce the probability of such collision, and as such a detailed description thereof will hereinafter be described with reference to FIGS. 7 and 8. Although an actual carrier sensing range is different from a transmission range, it is assumed that the actual carrier sensing range is identical to the transmission range for convenience of description and better understanding of the present disclosure.

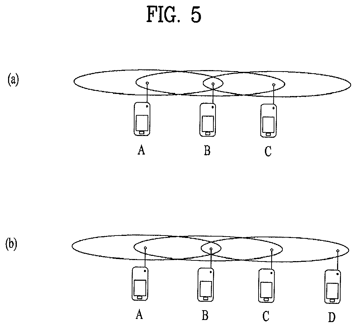

FIG. 5 is a conceptual diagram illustrating a hidden node and an exposed node.

FIG. 5(a) exemplarily shows the hidden node. In FIG. 5(a), STA A communicates with STA B, and STA C has information to be transmitted. In FIG. 5(a), STA C may determine that the medium is in the idle state when performing carrier sensing before transmitting data to STA B, under the condition that STA A transmits information to STA B. Since transmission of STA A (i.e., occupied medium) may not be detected at the location of STA C, it is determined that the medium is in the idle state. In this case, STA B simultaneously receives information of STA A and information of STA C, resulting in the occurrence of collision. Here, STA A may be considered as a hidden node of STA C.

FIG. 5(b) exemplarily shows an exposed node. In FIG. 5(b), under the condition that STA B transmits data to STA A, STA C has information to be transmitted to STA D. If STA C performs carrier sensing, it is determined that the medium is occupied due to transmission of STA B. Therefore, although STA C has information to be transmitted to STA D, the medium-occupied state is sensed, such that the STA C must wait for a predetermined time (i.e., standby mode) until the medium is in the idle state. However, since STA A is actually located out of the transmission range of STA C, transmission from STA C may not collide with transmission from STA B from the viewpoint of STA A, such that STA C unnecessarily enters the standby mode until STA B stops transmission. Here, STA C is referred to as an exposed node of STA B.

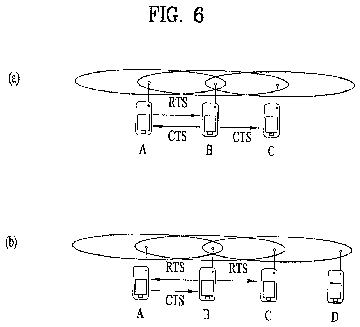

FIG. 6 is a conceptual diagram illustrating Request To Send (RTS) and Clear To Send (CTS).

In order to efficiently utilize the collision avoidance mechanism under the above-mentioned situation of FIG. 5, it is possible to use a short signaling packet such as RTS and CTS. RTS/CTS between two STAs may be overheard by peripheral STA(s), such that the peripheral STA(s) may consider whether information is communicated between the two STAs. For example, if STA to be used for data transmission transmits the RTS frame to the STA having received data, the STA having received data transmits the CTS frame to peripheral STAs, and may inform the peripheral STAs that the STA is going to receive data.

FIG. 6(a) exemplarily shows the method for solving problems of the hidden node. In FIG. 6(a), it is assumed that each of STA A and STA C is ready to transmit data to STA B. If STA A transmits RTS to STA B, STA B transmits CTS to each of STA A and STA C located in the vicinity of the STA B. As a result, STA C must wait for a predetermined time until STA A and STA B stop data transmission, such that collision is prevented from occurring.

FIG. 6(b) exemplarily shows the method for solving problems of the exposed node. STA C performs overhearing of RTS/CTS transmission between STA A and STA B, such that STA C may determine no collision although it transmits data to another STA (for example, STA D). That is, STA B transmits an RTS to all peripheral STAs, and only STA A having data to be actually transmitted can transmit a CTS. STA C receives only the RTS and does not receive the CTS of STA A, such that it can be recognized that STA A is located outside of the carrier sensing range of STA C.

### Power Management

As described above, the WLAN system has to perform channel sensing before STA performs data transmission/reception. The operation of always sensing the channel causes persistent power consumption of the STA. There is not much difference in power consumption between the Reception (Rx) state and the Transmission (Tx) state. Continuous maintenance of the Rx state may cause large load to a power-limited STA (i.e., STA operated by a battery). Therefore, if STA maintains the Rx standby mode so as to persistently sense the channel, power is inefficiently consumed without special advantages in terms of WLAN throughput. In order to solve the above-mentioned problem, the WLAN system supports a Power Management (PM) mode of the STA.

The PM mode of the STA is classified into an active mode and a Power Save (PS) mode. The STA is basically operated in the active mode. The STA operating in the active mode maintains an awake state. If the STA is in the awake state, the STA may normally operate such that it can perform frame transmission/reception, channel scanning, or the like. On the other hand, STA operating in the PS mode is configured to switch from the doze state to the awake state or vice versa. STA operating in the sleep state is operated with minimum power, and the STA does not perform frame transmission/reception and channel scanning.

The amount of power consumption is reduced in proportion to a specific time in which the STA stays in the sleep state, such that the STA operation time is increased in response to the reduced power consumption. However, it is impossible to transmit or receive the frame in the sleep state, such that the STA cannot mandatorily operate for a long period of time. If there is a frame to be transmitted to the AP, the STA operating in the sleep state is switched to the awake state, such that it can transmit/receive the frame in the awake state. On the other hand, if the AP has a frame to be transmitted to the STA, the sleep-state STA is unable to receive the frame and cannot recognize the presence of a frame to be received. Accordingly, STA may need to switch to the awake state according to a specific period in order to recognize the presence or absence of a frame to be transmitted to the STA (or in order to receive a signal indicating the presence of the frame on the assumption that the presence of the frame to be transmitted to the STA is decided).

The AP may transmit a beacon frame to STAs in a BSS at predetermined intervals. The beacon frame may include a traffic indication map (TIM) information element. The TIM information element may include information indicating that the AP has buffered traffic for STAs associated therewith and will transmit frames. TIM elements include a TIM used to indicate a unitcast frame and a delivery traffic indication map (DTIM) used to indicate a multicast or broadcast frame.

FIGS. 7 to 9 are conceptual diagrams illustrating detailed operations of the STA having received a Traffic Indication Map (TIM).

Referring to FIG. 7, STA is switched from the sleep state to the awake state so as to receive the beacon frame including a TIM from the AP. STA interprets the received TIM element such that it can recognize the presence or absence of buffered traffic to be transmitted to the STA. After STA contends with other STAs to access the medium for PS-Poll frame transmission, the STA may transmit the PS-Poll frame for requesting data frame transmission to the AP. The AP having received the PS-Poll frame transmitted by the STA may transmit the frame to the STA. STA may receive a data frame and then transmit an ACK frame to the AP in response to the received data frame. Thereafter, the STA may re-enter the sleep state.

As can be seen from FIG. 7, the AP may operate according to the immediate response scheme, such that the AP receives the PS-Poll frame from the STA and transmits the data frame after lapse of a predetermined time [for example, Short Inter-Frame Space (SIFS)]. In contrast, the AP having received the PS-Poll frame does not prepare a data frame to be transmitted to the STA during the SIFS time, such that the AP may operate according to the deferred response scheme, and as such a detailed description thereof will hereinafter be described with reference to FIG. 8.

The STA operations of FIG. 8 in which the STA is switched from the sleep state to the awake state, receives a TIM from the AP, and transmits the PS-Poll frame to the AP through contention are identical to those of FIG. 7. If the AP having received the PS-Poll frame does not prepare a data frame during the SIFS time, the AP may transmit the ACK frame to the STA instead of transmitting the data frame. If the data frame is prepared after transmission of the ACK frame, the AP may transmit the data frame to the STA after completion of such contending. STA may transmit the ACK frame indicating successful reception of a data frame to the AP, and may be shifted to the sleep state.

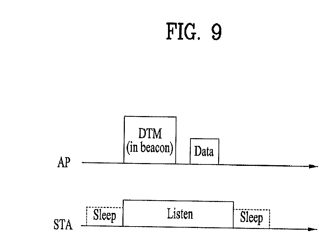

FIG. 9 shows the exemplary case in which AP transmits DTIM. STAs may be switched from the sleep state to the awake state so as to receive the beacon frame including a DTIM element from the AP. STAs may recognize that multicast/broadcast frame(s) will be transmitted through the received DTIM. After transmission of the beacon frame including the DTIM, AP may directly transmit data (i.e., multicast/broadcast frame) without transmitting/receiving the PS-Poll frame. While STAs continuously maintains the awake state after reception of the beacon frame including the DTIM, the STAs may receive data, and then switch to the sleep state after completion of data reception.

### Frame structure

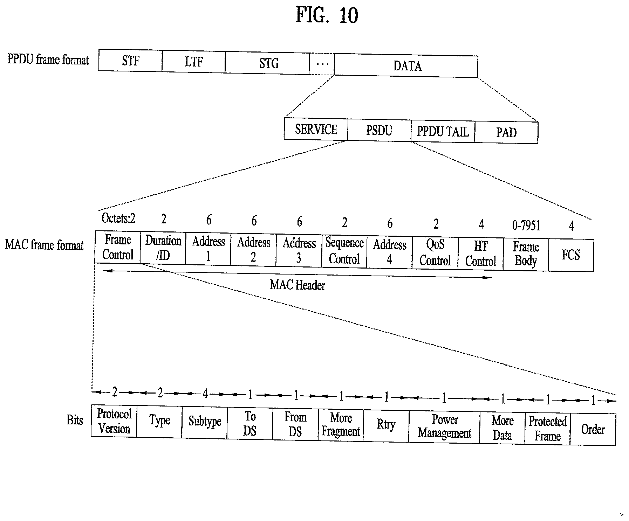

FIG. 10 is an explanatory diagram of an exemplary frame structure used in an IEEE 802.11 system.

A PPDU (Physical Layer Protocol Data Unit) frame format may include an STF (Short Training Field), an LTF (Long Training Field), a SIG (SIGNAL) field and a data field. The most basic (e.g., non-HT (High Throughput)) PPDU frame format may include only an L-STF (Legacy-STF), an L-LTF (Legacy-LTF), a SIG field and a data field.

The STF is a signal for signal detection, AGC (Automatic Gain Control), diversity selection, accurate time synchronization, etc., and the LTF is a signal for channel estimation, frequency error estimation, etc. The STF and LTF may be collectively called a PLCP preamble. The PLCP preamble may be regarded as a signal for OFDM physical layer synchronization and channel estimation.

The SIG field may include a RATE field and a LENGTH field. The RATE field may include information about modulation and coding rates of data. The LENGTH field may include information about the length of data. In addition, the SIG field may include a parity bit, a SIG TAIL bit, etc.

The data field may include a SERVICE field, a PSDU (Physical layer Service Data Unit) and a PPDU TAIL bit. The data field may also include padding bits as necessary. Some bits of the SERVICE field may be used for synchronization of a descrambler at a receiving end. The PSDU corresponds to an MPDU (MAC Protocol Data Unit) defined in the MAC layer and may include data generated/used in a higher layer. The PPDU TAIL bit may be used to return an encoder to state 0. The padding bits may be used to adjust the length of the data field to a predetermined unit.

The MPDU is defined depending on various MAC frame formats, and a basic MAC frame includes a MAC header, a frame body and an FCS (Frame Check Sequence). The MAC frame may be composed of the MPDU and transmitted/received through PSDU of a data part of the PPDU frame format.

The MAC header includes a frame control field, a duration/ID field, an address field, etc. The frame control field may include control information necessary for frame transmission/reception. The duration/ID field may be set to a time to transmit a relevant a relevant frame.

The duration/ID field included in the MAC header may be set to a 16-bit length (e.g., B0 to B15). Content included in the duration/ID field may depend on frame type and sub-type, whether transmission is performed for a CFP (contention free period), QoS capability of a transmission STA and the like. (i) In a control frame corresponding to a sub-type of PS-Poll, the duration/ID field may include the AID of the transmission STA (e.g., through 14 LSBs) and 2 MSBs may be set to 1. (ii) In frames transmitted by a PC (point coordinator) or a non-QoS STA for a CFP, the duration/ID field may be set to a fixed value (e.g., 32768). (iii) In other frames transmitted by a non-QoS STA or control frames transmitted by a QoS STA, the duration/ID field may include a duration value defined per frame type. In a data frame or a management frame transmitted by a QoS STA, the duration/ID field may include a duration value defined per frame type. For example, B15 = 0 of the duration/ID field indicates that the duration/ID field is used to indicate a TXOP duration, and B0 to B14 may be used to indicate an actual TXOP duration. The actual TXOP duration indicated by B0 to B14 may be one of 0 to 32767 and the unit thereof may be microseconds (µs). However, when the duration/ID field indicates a fixed TXOP duration value (e.g., 32768), B15 can be set to 1 and B0 to B14 can be set to 0. When B14=1 and B15=1, the duration/ID field is used to indicate an AID, and B0 to B13 indicate one AID of 1 to 2007. Refer to the IEEE 802.11 standard document for details of Sequence Control, QoS Control, and HT Control subfields of the MAC header.

The frame control field of the MAC header may include Protocol Version, Type, Subtype, To DS, From DS, More Fragment, Retry, Power Management, More Data, Protected Frame and Order subfields. Refer to the IEEE 802.11 standard document for contents of the subfields of the frame control field.

### WUR(Wake-Up Radio)

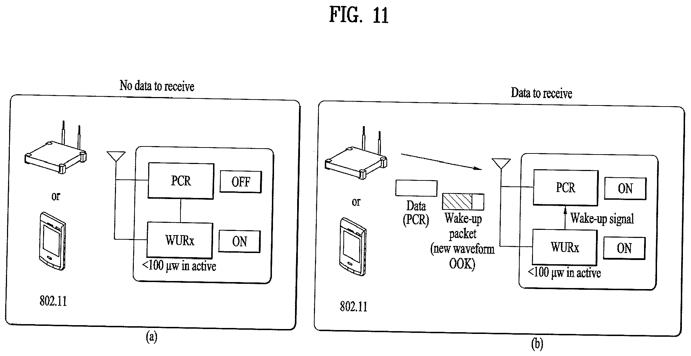

First, a general description of a Wake-Up Radio Receiver (WURx), which is compatible with a WLAN system (e.g., 802.11), will now be given with reference to FIG. 11.

Referring to FIG. 11, an STA may support a Primary Connectivity Radio (PCR) (e.g., IEEE 802.11a/b/g/n/ac/ax WLAN), which is used for main wireless communication, and a Wake-Up Radio (WUR) (e.g., IEEE 802.11ba).

The PCR is used for data transmission and reception and may be turned off when there is no data to be transmitted and received. In the case in which the PCR is turned off, if there is a packet to be received, a WURx of the STA may wake the PCR. Therefore, user data is transmitted through the PCR.

The WURx may not be used for user data and may function only to wake a PCR transceiver. The WURx may be a simple type of receiver without a transmitter and is activated while the PCR is turned off. In an active state, target power consumption of the WURx desirably does not exceed 100 microwatts (µW). To operate at such low power, a simple modulation scheme, for example, On-Off Keying (OOK), may be used and a narrow bandwidth (e.g., 4 MHz or 5 MHz) may be used. A reception range (e.g., distance) aimed by the WURx may conform to current 802.11.

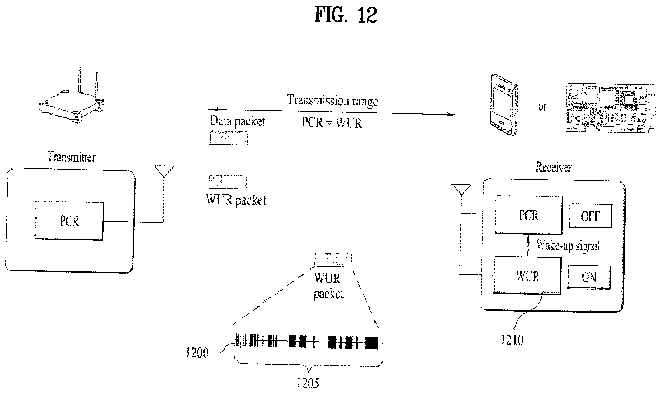

FIG. 12 is an explanatory diagram of design and operation of a WUR packet.

Referring to FIG. 12, the WUR packet may include a PCR part 1200 and a WUR part 1205.

The PCR part 1200 is used for coexistence with a legacy WLAN system and the PCR part may be referred to as a WLAN preamble. To protect the WUR packet from other PCR STAs, at least one of an L-STF, an L-LTF, or an L-SIG of a legacy WLAN may be included in the PCR part 1200. Therefore, a third party legacy STA may be aware, through the PCR part 1200 of the WUR packet, that the WUR packet is not intended therefor and a medium of a PCR has been occupied by another STA. However, the WURx does not decode the PCR part of the WUR packet. This is because the WURx supporting narrowband and OOK demodulation does not support reception of a PCR signal.

At least a portion of the WUR part 1205 may be modulated using OOK. For example, the WUR part may include at least one of a WUR preamble, a MAC header (e.g., a receiver address, etc.), a frame body, or a Frame Check Sequence (FCS). OOK modulation may be performed by correcting an OFDM transmitter.

A WURx 1210 may consume very low power less than 100 µW as described above and may be implemented by a small, simple OOK demodulator.

Thus, since the WUR packet needs to be designed to be compatible with the WLAN system, the WUR packet may include a preamble (e.g., an OFDM scheme) of a legacy WLAN and a new Low-Power (LP)-WUR signal waveform (e.g., an OOK scheme).

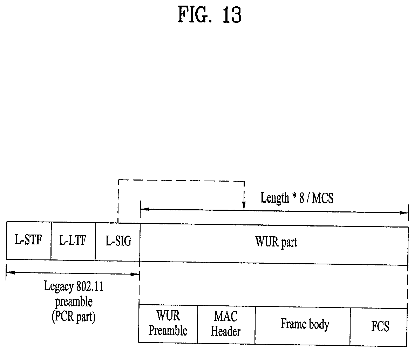

FIG. 13 illustrates an example of a WUR packet. The WUR packet of FIG. 13 includes a PCR part (e.g., a legacy WLAN preamble) for coexistence with a legacy STA.

Referring to FIG. 13, the legacy WLAN preamble may include an L-STF, an L-LTF, and an L-SIG. A WLAN STA (e.g., a third party) may detect the beginning of the WUR packet through the L-STF. The WLAN STA (e.g., the third party) may detect the end of the WUR packet through the L-SIG. For example, the L-SIG field may indicate the length of a (e.g., OOK-modulated) payload of the WUR packet.

A WUR part may include at least one of a WUR preamble, a MAC header, a frame body, or an FCS. The WUR preamble may include, for example, a PN sequence. The MAC header may include a receiver address. The frame body may include other information necessary for wake-up. The FCS may include a Cyclic Redundancy Check (CRC).

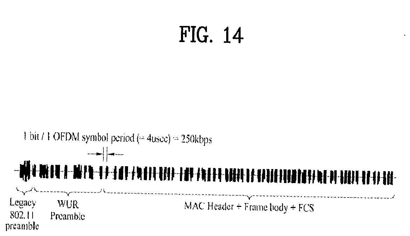

FIG. 14 illustrates the waveform of the WUR packet of FIG. 13. Referring to FIG. 14, in an OOK-modulated WUR part, one bit per OFDM symbol period (e.g., 4 µsec) may be transmitted. Therefore, a data rate of the WUR part may be 250 kbps.

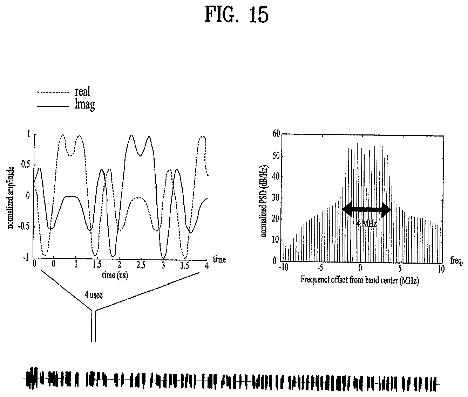

FIG. 15 is an explanatory diagram of a WUR packet generated using an OFDM transmitter of a WLAN. In the WLAN, a Phase Shift Keying (PSK)-OFDM transmission scheme is used. If the WUR packet is generated by adding a separate OOK modulator for OOK modulation, implementation cost of a transmitter may increase. Therefore, a method of generating the OOK-modulated WUR packet by reusing an OFDM transmitter is considered.

According to an OOK modulation scheme, a bit value of 1 is modulated to a symbol having power of a threshold value or more (i.e., on) and a bit value of 0 is modulated to a symbol having power lower than the threshold value (i.e., off). Obviously, the bit value of 1 may be defined as power 'off'.

Thus, in the OOK modulation scheme, the bit value of 1/0 is indicated through power-on/off at a corresponding symbol position. The above-described simple OOK modulation/demodulation scheme is advantageous in that power consumed to detect/demodulate a signal of a receiver and cost for receiver implementation may be reduced. OOK modulation for turning a signal of/off may be performed by reusing a legacy OFDM transmitter.

The left graph of FIG. 15 illustrates a real part and an imaginary part of a normalized amplitude during one symbol period (e.g., 4 µsec) for an OOK-modulated bit value 1 by reusing an OFDM transmitter of a legacy WLAN. Since an OOK-modulated result for a bit value 0 corresponds to power-off, this is not illustrated.

The right graph of FIG. 15 illustrates normalized Power Spectral Density (PSD) for an OOK-modulated bit value 1 on the frequency domain by reusing the OFDM transmitter of the legacy WLAN. For example, a center 4 MHz may be used for WUR in a corresponding band. In FIG. 15, although WUR operates in a bandwidth of 4 MHz, this is for convenience of description and frequency bandwidths of other sizes may be used. In this case, it is desirable that WUR operate in a narrower bandwidth than an operating bandwidth of a PCR (e.g., the legacy WLAN) in order to reduce power.

In FIG. 15, it is assumed that a subcarrier width (e.g., subcarrier spacing) is 312.5 kHz and an OOK pulse bandwidth corresponds to 13 subcarriers. The 13 subcarriers correspond to about 4 MHz (i.e., 4.06 MHz = 13 ^{∗} 312.5 kHz) as described above.

In the legacy OFDM transmitter, an input sequence of Inverse Fast Fourier Transform (IFFT) is defined as s = {13 subcarrier tone sequence} and IFFT for the sequence s is performed as Xt = IFFT(s) and then a Cyclic Prefix (CP) of a length of 0.8 µsec is added, thereby generating a symbol period of about 4 µs.

The WUR packet may also be referred to as a WUR signal, a WUR frame, or a WUR PPDU. The WUR packet may be a packet for broadcast/multicast (e.g., a WUR beacon) or a packet for unicast (e.g., a packet for ending and then waking up a WUR mode of a specific WUR STA).

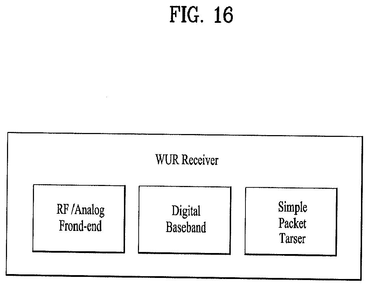

FIG. 16 illustrates the structure of a WURx Referring to FIG. 16, the WURx may include an RF/analog front-end, a digital baseband processor, and a simple packet parser. FIG. 16 illustrates an exemplary structure of the WURx and the WURx of the present disclosure is not limited to the configuration of FIG. 16.

Hereinbelow, a WLAN STA having the WURx is simply referred to as a WUR STA. The WUR STA may be simply referred to as an STA.

### - OOK modulation with Manchester coding

According to an embodiment of the present disclosure, Manchester coding may be used to generate an OOK symbol. According to Manchester coding, 1-bit information is indicated through two sub-information (or two coded bits). For example, if 1-bit information '0' is subjected to Manchester coding, two subinformation bits '10' (i.e., On-Off) are output. In contrast, if 1-bit information '1' is subjected to Manchester coding, two subinformation bits '01' (i.e., Off-On) are output. Here, an order of On and Off of subinformation bits may be inverted according to an embodiment.

A method of generating one OOK symbol for 1-bit information '0' based on such a Manchester coding scheme will be described. For convenience of description, one OOK symbol corresponds to 3.2 µs in the time domain and K subcarriers in the frequency domain. However, the present disclosure is not limited thereto.

First, a method of generating an OOK symbol for 1-bit information '0' based on Manchester coding will now be described. The length of one OOK symbol may be divided into (i) 1.6 µs for the first subinformation bit '1' and (ii) 1.6 µs for the second subinformation bit '0'.
(i) A signal corresponding to the first subinformation bit '1' may be obtained by performing IFFT after mapping β to odd-numbered subcarriers and mapping 0 to even-numbered subcarriers, among K subcarriers. For example, when IFFT is performed by mapping β at an interval of two subcarriers in the frequency domain, a periodic signal of 1.6 µs repeatedly appears twice in the time domain. The first or second signal among periodic signals of 1.6 µs repeated twice may be used as the signal corresponding to the first subinformation bit '1'. β is a power normalization factor and may be, for example, 1/sqrt(ceil(K/2)). For example, K consecutive subcarriers used to generate the signal corresponding to the first subinformation bit '1' among all 64 subcarriers (i.e., a band of 20 MHz) may be represented as, for example, [33-floor (K/2): 33 + ceil(K/2) -1].
(ii) A signal corresponding to the second subinformation bit '0' may be obtained by performing IFFT after mapping 0 to K subcarriers. For example, K consecutive subcarriers used to generate the signal corresponding to the second subinformation bit '0' among a total of 64 subcarriers (i.e., a band of 20 MHz) may be represented as, for example, [33-floor(K/2): 33 + ceil(K/2)-1] .

An OOK symbol for 1-bit information '1' may be acquired by deploying a signal corresponding to a subinformation bit '1' after a signal corresponding to a subinformation bit '0'.

### - Symbol reduction

For example, the length of one symbol for WUR may be set to be smaller than 3.2 µs. For example, one symbol may be set to information of 1.6 µs, 0.8 µs, or 0.4 µs + CP.
(i) 0.8 µs, information bit 1: β (e.g., power normalization factor)^{∗}1 may be mapped to subcarriers (i.e., 1, 5, 9, ...) satisfying mod(subcarrier index, 4)=1 among K consecutive subcarriers and nulling may be applied (e.g., 0 may be mapped) to the remaining subcarriers. β may be 1/sqrt(ceil(K/4)). In this way, β^{∗}1 may be mapped at intervals of four subcarriers. When IFFT is performed by mapping β^{∗}1 at intervals of four subcarriers in the frequency domain, signals of a length of 0.8 µs are repeated in the time domain and one of these signals may be used as a signal corresponding to the information bit 1.
(ii) 0.8 µs, information bit 0: Signals in the time domain may be obtained by mapping 0 to K subcarriers and performing IFFT and one 0.8-µs signal among these signals may be used.
(iii) 0.4 µs, information bit 1: β (e.g., power normalization factor)^{∗}1 is mapped to subcarriers (i.e., 1, 9, 17, ...) satisfying mod(subcarrier index, 8)=1 among K consecutive subcarriers and nulling may be applied (e.g., 0 may be mapped) to the remaining subcarriers. β may be 1/sqrt(ceil(K/8)). In this way, β^{∗}1 may be mapped at intervals of 8 subcarriers. When IFFT is performed by mapping β^{∗}1 at intervals of 8 subcarriers in the frequency domain, signals of a length of 0.4 µs are repeated in the time domain and one of these signals may be used as a signal corresponding to the information bit 1.
(iv) 0.4 µs, information bit 0: Signals in the time domain may be obtained by mapping 0 to K subcarriers and performing IFFT and one 0.4 µs signal among these signals may be used.

### WUR frame and WUR operation for PCR scanning

According to the present disclosure, WUR is not limitedly used simply for power saving and may support AP scanning/discovery of an STA (e.g., AP scanning/discovery that operates a PCR of an existing WLAN, etc.). For example, the structure of a WUR frame including information required for the STA to scan/discover a BSS and/or an AP on the PCR (hereinafter, information about an AP) may be newly defined.

A WUR STA receiving the WUR frame may confirm the information about the AP operating in the PCR even in a WUR mode. Since the WUR STA may detect the AP without waking up, the WUR STA may maximize the effect of power reduction.

When necessary, the WUR STA may wake up and then perform active/passive scanning and/or association in the PCR with respect to the confirmed AP in the WUR mode. In this case, when the WUR STA uses the information about the AP, received through the WUR frame, there is an advantage that the WUR STA may more rapidly and efficiently perform active/passive scanning and/or association in the PCR. Additionally, a process for the STA to perform scanning based on such a WUR frame may be newly defined.

When the STA performs scanning based on the WUR frame, the structure of an available established connection information table may be newly defined.

The WUR frame including information for scanning/discovery may be simply referred to as a WUR discovery frame, a WUR frame, or a WUR information frame.

If the WUR discovery frame defined in 802.11ba is used, the STA may perform, with low power, a function of roaming scan in an Extended Service Set (ESS) environment, such as Wi-Fi of a communication company or public Wi-Fi of an airport or a subway station, or a function of location scan for identifying the location of the STA.

Hereinafter, the structure of the WUR discovery frame and the operation of the AP/STA related to the WUR discovery frame will be described.

### [Proposal 1]

Although the WUR discovery frame proposed hereinbelow may be a WUR beacon frame, the present disclosure is not limited thereto.

In WUR, the AP may transmit information about the AP, for example, information about at least one of a BSSID, capability information, channel switch announcement, an SSID, a supported rate, and BSS load, or information corresponding thereto, according to a period previously agreed on with the WUR STA. The STA may determine whether the STA may be associated with a specific AP based on the information about the AP received through the WUR and reduce the time consumed to attempt to perform association with a new AP.

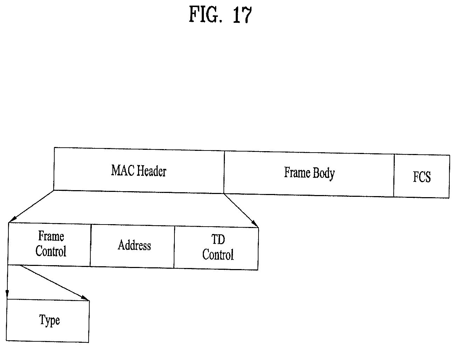

FIG. 17 illustrates an example of a general WUR frame. The WUR frame of FIG. 17 may be included in a payload of a WUR PPDU as a MAC frame.

Referring to FIG. 17, the WUR frame may include a MAC header, a frame body, and a Frame Check Sequence (FCS). The MAC header may include at least one of a frame control field, an address field, and a type Dependent (TD) control field. The frame control field may include a type subfield. The type subfield indicates the type of the WUR frame and may indicate, for example, a type such as a broadcast/multicast frame or a WUR beacon/wake-up frame. The address field may include identifier information of a transmitter for transmitting the WUR frame. Information included in the TD control field may vary depending on a frame type indicated by the type subfield and include information related to time synchronization. The frame body is an optional field that may be omitted to reduce the length of the frame.

### - WUR information frame structure

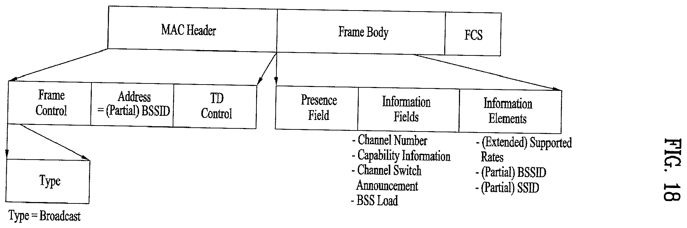

FIG. 18 illustrates the structure of a WUR frame according to an embodiment of the present disclosure. The frame illustrated in FIG. 18 may be referred to as a WUR discovery frame.

The locations of some or all fields of information included in the WUR frame are not limited to those illustrated in FIG. 18 and the location of each information may be changed to a WUR MAC header or a frame body.

The WUR frame of FIG. 18 may be transmitted in a broadcast manner. In addition, the WUR frame may be transmitted whether an STA is associated with an AP. For example, the WUR frame may be transmitted to both an associated STA and an unassociated STA. In other words, not only an STA that is associated with a corresponding AP through the PCR but also an STA that is not associated with the AP may receive the WUR frame transmitted by the AP through WUR Alternatively, the WUR frame of FIG. 18 may be transmitted in the form of a WUR beacon frame or a WUR broadcast frame.

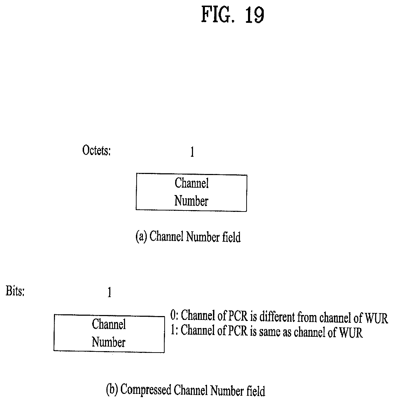

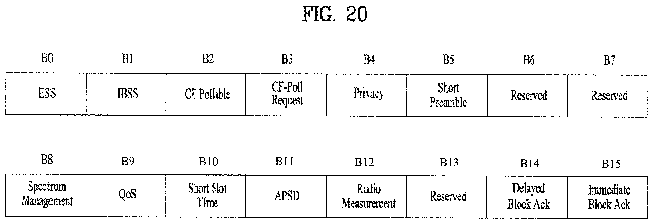

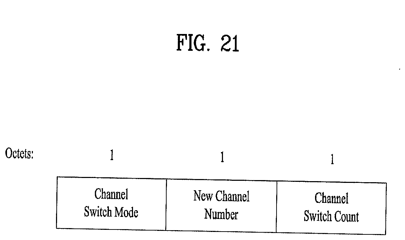

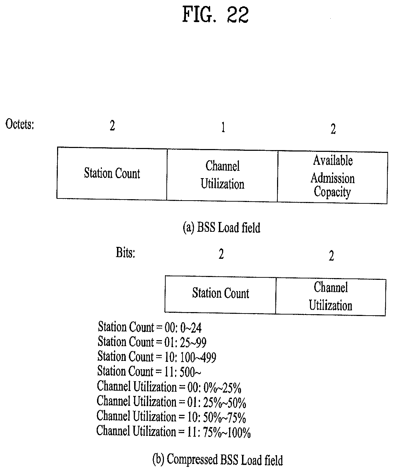

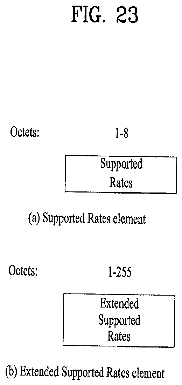

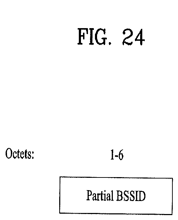

The WUR frame (e.g., WUR discovery frame) may not necessarily include all of information described in (1) to (4) below and may include only some of the information.
(1) Address field: The address field may include at least a part of a BSS ID (BSSID) of an AP transmitting the WUR frame. For example, assuming that the WUR frame is a beacon frame, even an unassociated STA may receive the beacon frame. If the AP transmitting the beacon frame is an AP with which an STA was associated past, the STA may identify the AP through the BSSID or a portion of the BSSID.
(2) Presence field: The presence field consisting of 4 bits or 8 bits may be a bitmap indicating which information field is provided after the presence field. The presence field may be omitted. The STA may be aware of which information is included in the information field through the presence field. The AP may form the frame body of the WUR beacon by omitting information determined to be unnecessary from the information field.
(3) Information field(s): Information field(s) may include at least one of (i) to (iv) below. Each information of the information field(s) may have a fixed length. Although the following information may basically follow the structure defined in the 802.11 specification, the structure thereof may vary according to a previous agreement between the AP and the STA. On the other hand, whether each information is included in the information field(s) may be indicated in a bitmap format in the aforementioned presence field.
   (i) Channel number: In an example, the AP may transmit information about a channel currently occupied/operated thereby in a PCR, for example, a channel number (e.g., primary channel number), in the WUR frame. When an STA receiving the WUR frame performs scanning for association with another AP, the STA may reduce scanning time by scanning only a channel indicated through the channel number without scanning all PCR channels. Since information about the channel number may consist of bits of a relatively short length, the information about the channel number may be included in the MAC header. The channel number defined in the 802.11 specification is composed of one byte as illustrated in FIG. 19(a). However, according to an embodiment of the present disclosure, as a method for reducing overhead, information about the channel number may be indicated through a 1-bit indicator as illustrated in FIG. 19(b). Alternatively, the information about the channel number may be indicated by a 2-bit indicator or by another method.
   (ii) Capability information: This information may define the type of an STA with which the AP desires to be associated. FIG. 20 illustrates a capability information field defined in 802.11. In WUR, all of subfields of FIG. 20 may be used or only a part thereof may be used.
   (iii) Channel switch announcement: There may be the case in which a PCR channel of the AP is switched after the STA is informed of which channel the AP uses through the channel number field. In this case, the AP may update or delete channel information of the AP possessed by the STA through the channel switch announcement field illustrated in FIG. 21.
   (iv) BSS load: The AP may inform the STA of information about load of a BSS. The BSS load field may be configured as illustrated in FIG. 22(a) or 22(b). The STA may determine whether to be associated with a specific AP based on the BSS load field. For example, the STA may determine the AP with which the STA is associated based on values of a station count subfield and an available admission capacity subfield included in the BSS load field.
(4) Information element(s): The information element(s) may include variable-length information, for example, at least one of (i) to (iii) described below. Elements of (i) to (iii) below may basically conform to the structure defined in the 802.11 specification. However, if an agreement has already been reached between the AP and the STA, information or structures of the information element(s) may vary. All of the elements of (i) to (iii) are not necessarily included and the elements of (i) to (iii) may be selected/omitted as necessary. The included information may be composed of an element ID and a length based on the 802.11 specification and may be omitted if there has been an agreement between the AP and the STA.
   (i) (Extended) supported rates: In order for the STA to be associated with the AP, the STA needs to be aware of which data rate a network supports and whether the data rate is mandatory/optional. To this end, the AP may include (extended) supported rates in the WUR beacon frame as in FIG. 23(a) or 23(b) and transmit the same to the STA.
   (ii) (Partial/compressed) BSSID: FIG. 24 illustrates a partial BSSID. The partial BSSID may be referred to as a compressed BSSID. The partial BSSID is included in an address field of the MAC header of the general WUR frame. In order to use the WUR frame for a scanning purpose, a complete BSSID is required. To this end, another part of the BSSID different from the BSSID included in the address field may be included in the WUR frame. Alternatively, the Most Significant Bit (MSB) of the BSSID may be included in the WUR frame. In this case, information on another part of the BSSID may be located in the MAC header (e.g., TD control field) rather than the frame body so that the STA may quickly identify the BSSID of the AP.
   (iii) (Partial/compressed) SSID: When the STA performs a scanning procedure, the STA requires an SSID of the AP in order to be associated with the AP. Accordingly, the SSID or a part of the SSID may be included in the WUR frame (e.g., WUR discovery frame). As an example, the STA may store the SSID of the AP with which the STA has been previously associated in an information table. With respect to the AP with which the STA has already been associated, the STA may search for the AP from the information table using the partial SSID received through the WUR frame, obtain a complete SSID, and perform association with the AP.

### - Established connection history table in STA

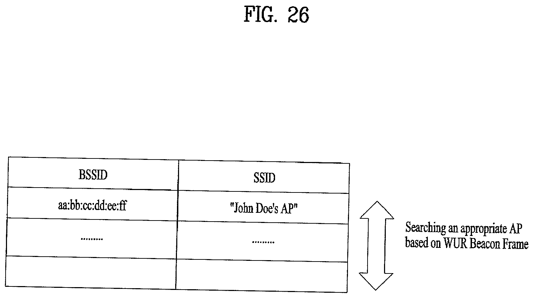

FIG. 26 illustrates an example of a connection table stored in an STA.

As proposed above, the STA that has received the WUR frame (e.g., WUR discovery frame) may identify complete information of the BSSID and/or SSID through pre-stored AP-STA connection table and specify the AP. For example, each STA may store the BSSID and/or SSID of the AP with which the STA has previously been associated in the AP-STA connection table. The STA may search for and specify the AP that matches information of the received WUR frame based on the stored AP-STA connection table.

### - Implementation examples based on Proposal 1

### Embodiment of configuration of WUR information frame

As mentioned above, the WUR frame for AP scanning/discovery may be configured in various ways. Although a WUR beacon frame including only minimal information may be an example, the present disclosure is not limited thereto.

### (i) Information frame based on WUR beacon frame

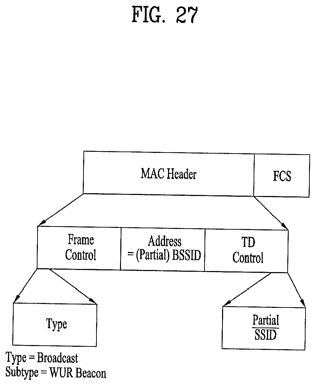

FIG. 27 illustrates an example of a WUR beacon frame for AP scanning/discovery.

All STAs should receive the WUR beacon frame. Since there may be an STA that does not have the capability to receive the frame body included in the WUR frame, it may be desirable, if possible, to include information necessary for PCR scanning/discovery in the MAC header.

FIG. 27 is based on the WUR beacon frame without the frame body. Upon receiving a partial BSSID included in an address field and a partial SSID included in a TD control field, the STA may specify the AP based on an established connection table thereof. The STA may quickly perform a directed probe request to a specified AP.

### (ii) Information frame based on WUR broadcast frame

As mentioned above, since all STAs should receive the WUR beacon frame, it is necessary to consider the capabilities of various STAs as much as possible. To include much information (e.g., primary channel information and information for PCR scanning/discovery such as a partial SSID) as compared with an example using the WUR beacon frame, the WUR broadcast frame, rather than the beacon frame, may be used

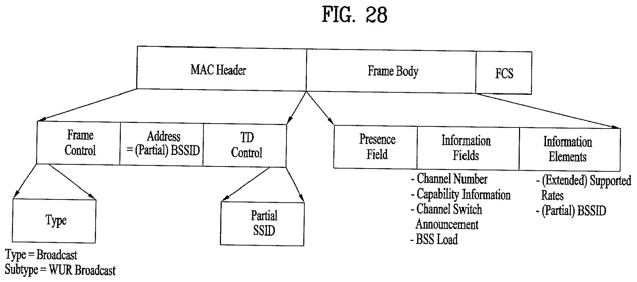

FIG. 28 illustrates an example of a WUR broadcast frame for AP scanning/discovery. For convenience, although it is assumed that a partial BSSID is included in an address field and a partial SSID is included in a TD control field, the present disclosure is not limited thereto. For example, another part of a BSSID may be included in the TD control field. Upon receiving the WUR broadcast frame, the STA may specify the AP based on an established connection table thereof and quickly perform a directed probe request to the specified AP.

In addition, the STA may perform directed active scanning through a channel identified through a channel number field of an information field without the need to scan all channels when a probe request is made to a specific AP. Prior to association, the STA may check the capability of the AP through a capability information field and may be associated with the AP with reference to channel switch announcement when channel switching is scheduled.

### (2) Scanning procedure

### (i) Active scanning procedure of legacy 802.11

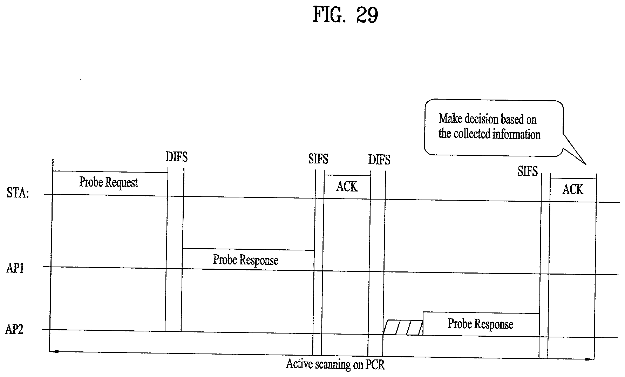

FIG. 29 illustrates an association process of an STA with a specific AP through active scanning of legacy 802.11 (e.g., PCR). The STA searches for an AP suitable for association by transmitting a probe request on each channel. Basically, since the STA needs to transmit a probe request frame on all possible channels, it takes a long time and consumes much power. In addition, since the STA transmits many frames, this may cause network congestion.

### (ii) Active scanning procedure using information frame

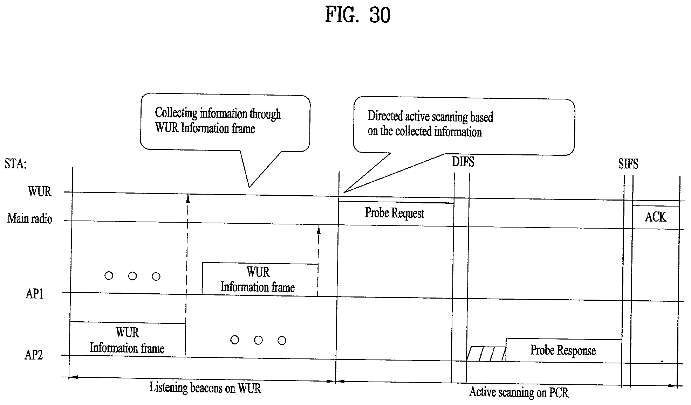

FIG. 30 illustrates a flow of a PCR active scanning method based on a WUR frame for AP scanning/discovery according to an embodiment of the present disclosure.

The AP may periodically transmit a WUR frame for PCR scanning/discovery. The STA may perform an active scanning procedure faster by using information for PCR scanning/discovery included in the WUR frame. If current channel information of the AP is included in the WUR frame, the STA may transmit a probe request on a channel on which the AP currently operates without the need to transmit the probe request on all channels, thereby reducing the time required for scanning.

### (iii) Passive scanning procedure using information frame

The WUR frame for PCR scanning/discovery proposed above is not limited to active scanning and may be used for a passive scanning procedure.

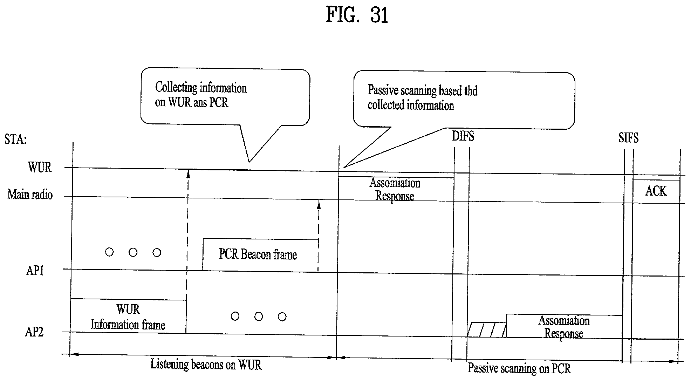

FIG. 31 illustrates a passive scanning procedure using the WUR frame proposed above. The STA may collect information about APs in the vicinity thereof by receiving the WUR frame for PCR scanning/discovery or receiving a PCR beacon frame from the APs. When the STA needs to be associated with another AP, the STA may perform association based on the collected information.

### [Proposal 2]

In addition to the discussion of Proposal 1, field elements and structures that may be included in the WUR frame (e.g., WUR discovery frame) are proposed and an AP discovery procedure in a PCR using the same is proposed.

Upon receiving the WUR discovery frame, the STA may use an additional function such as roaming scan or location scan by using low-power WUR without turning on a main radio (i.e., PCR). The STA that performs a scanning procedure may reduce the time consumed when attempting to perform association with a new AP by using information received through the WUR discovery frame or reduce power consumption by determining whether the STA may be associated with a specific AP.

The WUR discovery frame may include an AP ID (APID), a compressed SSID, and a PCR channel. APID may mean an identifier of a transmitter for transmitting the WUR discovery frame. The compressed SSID is the partial SSID described above and may be part of an existing SSID (e.g., 6 octets). The PCR channel may mean information about a channel on which the AP operates in the PCR.

The WUR frame may be divided into a Constant Length (CL) frame and a Variable Length (VL) frame. The WUR discovery frame for each of CL and VL is described.

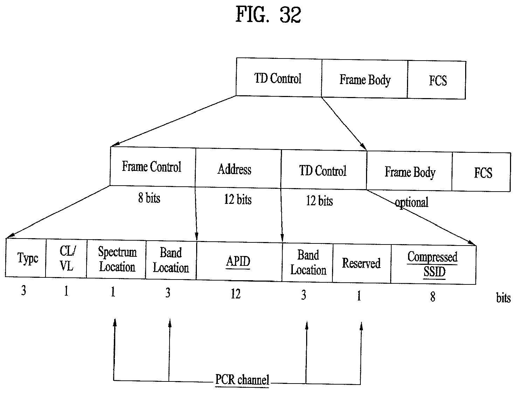

FIG. 32 illustrates a WUR discovery frame format according to an embodiment of the present disclosure.
(1) APID: APID may be 12 bits and may include an identifier of an AP that transmits the WUR discovery frame. Which APID is extracted from among various IDs of the AP and how APID is extracted may be variously changed and the scope of the present disclosure is not limited to any one method.
(2) Compressed SSID: The compressed SSID may be 8 bits and may mean a value of compressing an SSID of the AP transmitting the WUR discovery frame or a part of an AP SSID. Various methods of generating Compressed SSID may be used.
(3) PCR channel: The PCR channel may be 8 bits and may include the following subfields. The location of each subfield in the PCR channel field may be changed.
   (i) Spectrum location: The spectrum location subfield may be a 1-bit indicator. The spectrum location subfield may indicate a spectrum of the PCR. For example, the spectrum of the PCR may be indicated such that if the spectrum location subfield is 0, this indicates a 2.4 GHz spectrum and, if the spectrum location subfield is 1, this indicates a 5 GHz spectrum.
   (ii) Band location: The band location subfield may be 6 bits. The band location subfield indicates, through a center frequency, the location of a PCR band within a 2.4 GHz/5 GHz spectrum determined through the spectrum location subfield. In the case of 2.4 GHz, there are 14 center frequencies in total, so the center frequencies may be specified through 6 given bits. In the case of 5 GHz, since up to 48 channels of 20 MHz may be present, which vary from country to country, the center frequencies may be indicated even in a 5 GHz spectrum through 6 given bits. For example, when there are up to 9 bands of an 80 MHz unit, the first 4 bits of the band location subfield may indicate the location of a band of an 80 MHz unit and the remaining 2 bits of the band location subfield may indicate one of 4 bands of 20 MHz included in 80 MHz.

### Implementation examples based on Proposal 2

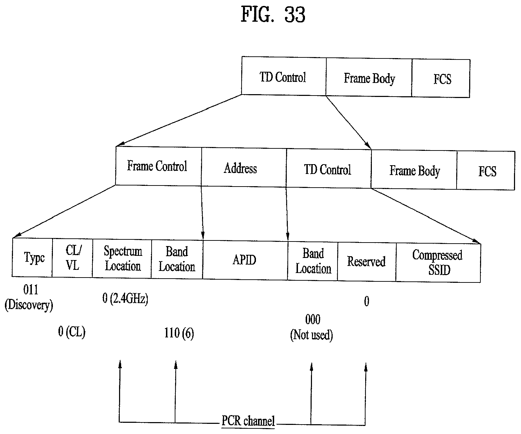

FIG. 33 illustrates an example of a CL WUR discovery frame. It is assumed that the CL WUR discovery frame of FIG. 33 is used to inform that the PCR of the AP operates on channel 6 of a 2.4 GHz spectrum.

Referring to FIG. 33, a type indicating that a corresponding frame is the WUR discovery frame may be newly defined. For convenience, although it is assumed that Type = 011 of the WUR discovery frame, the present disclosure is not limited thereto.

Since the WUR discovery frame of FIG. 33 has a fixed length, a CL/VL subfield is set to a value corresponding to CL (i.e., 0).

A spectrum location subfield is set to a value meaning 2.4 GHz. The band location subfield is set to a value indicating that the PCR operates on channel 6 among bands of 2.4 GHz. Upon receiving the WUR discovery frame, the STA may be aware of the location of a PCR channel of the AP that has transmitted the WUR discovery frame.

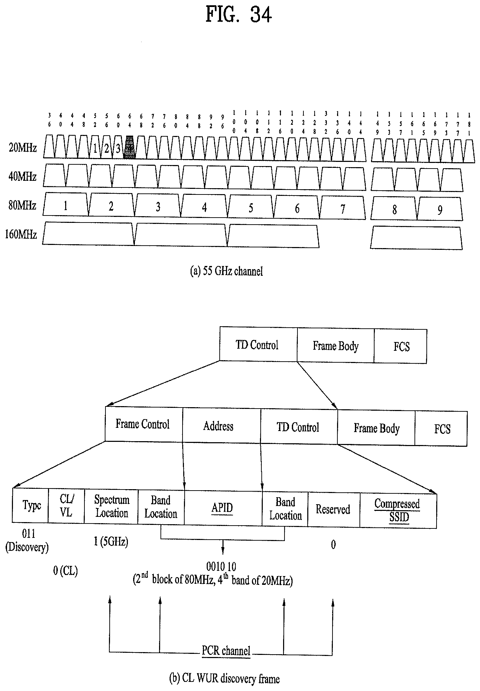

FIG. 34 illustrates a 5 GHz spectrum and another example of the CL WUR discovery frame.

FIG. 34(a) shows 5 GHz spectrum. The use of the 5 GHz spectrum depends on national regulations, so the AP/STA may operate according to the regulations.

It is assumed that the CL WUR discovery frame of FIG. 34(b) is used to inform that the PCR channel of the AP is channel 64 of the 5 GHz spectrum.

Referring to FIG. 34(b), a spectrum location subfield indicates 5 GHz. A band location subfield is set to a bit value 0010 10 to indicate that the PCR of the AP operates in the fourth 20 MHz band in the second 80 MHz band in the 5 GHz spectrum. The STA that has received the WUR discovery frame may be aware of the location of the PCR channel of the AP that has transmitted the WUR discovery frame.

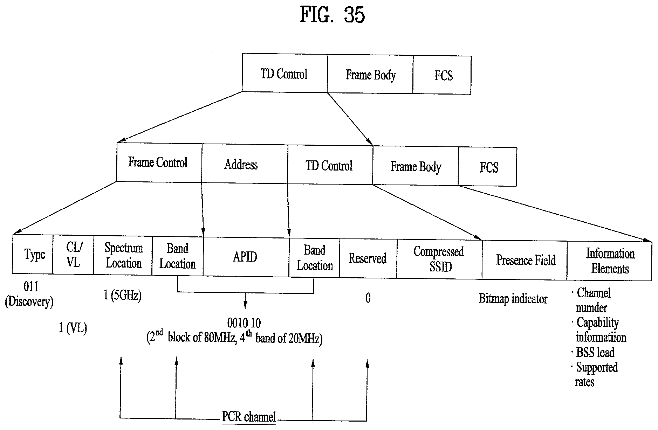

FIG. 35 illustrates an example of a VL WUR discovery frame. It is assumed that the VL WUR discovery frame of FIG. 35 is used to inform that the PCR of the AP operates on channel 64 of a 5 GHz spectrum.

Referring to FIG. 35, a spectrum location subfield indicates 5 GHz. A band location subfield is set to a bit value 0010 10 to indicate that the PCR of the AP operates in the fourth 20 MHz band of the second 80 MHz band in the 5 GHz spectrum. The STA that has received the WUR discovery frame may be aware of the location of the PCR channel of the AP that has transmitted the WUR discovery frame.

Since the WUR discovery frame of FIG. 35 supports a variable length, necessary information may be transmitted in a frame body field. A bitmap indicator included in a presence field may indicate which information element is inserted into the frame body field.

### [Proposal 3]

The structure of a compressed SSID to be included in the WUR discovery frame and an AP discovery procedure in a PCR using the same will be described.

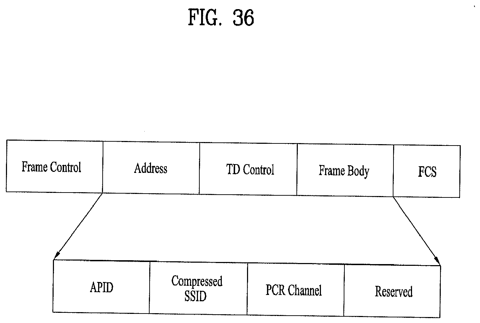

FIG. 36 illustrates a WUR discovery frame according to an embodiment of the present disclosure. FIG. 36 illustrates one implementation example of the WUR discovery frame. The present disclosure is not limited to FIG. 36 and the length and location of each subfield included in the WUR discovery frame may be changed.

As described above, APID may represent an identifier of a transmitter, a compressed SSID may represent an SSID obtained by compressing the length of an existing SSID (e.g., 6 octets), and a PCR channel may represent information about a channel on which the PCR of the AP operates.

A method for dynamically compressing the SSID is needed for the Compressed SSID subfield. The SSID consists of a character string and is encoded in various ways to form a bit stream. There is also a need for a method for avoiding collision between compressed SSIDs for different SSIDs. An example is described.

According to the current IEEE 802.11 specification, the AP/STA may be aware of whether the SSID is encoded in 8-bit Unicode Transformation Format (UTF-8) based on a UTF-8 SSID field of an extended capabilities element. In this embodiment, an SSID compression method is proposed considering whether the SSID is encoded in UTF-8 and how many bytes one character included in the SSID occupies when the SSID is encoded in UTF-8, and/or considering when UTF-8 is not used.

### (1) 1-byte per character UTF-8

As mentioned above, the SSID character string may be encoded in various forms including UTF-8. Commonly used numbers, symbols, alphabets, etc. are present in an area of 000000-00007F in hexadecimal, which consists of 8 bits including MSB 0, i.e., one byte, (i.e., 0xxxxxxx). Since the length of the compressed SSID is not currently determined, various methods such as (i) to (iii) below may be used to compress the SSID.

### (i) Parity method

The AP/STA may calculate a parity bit based on the bit of each character. According to a parity method, since one character corresponds to one bit, the parity method may be suitable when the field length of the compressed SSID is very small. However, since different SSIDs have the same compressed SSID, the probability of collision between compressed SSIDs is relatively high. The AP/STA may extract certain MSB bits or LSB bits from parity bits according to the length of a compressed SSID field or use an arbitrary hash function.

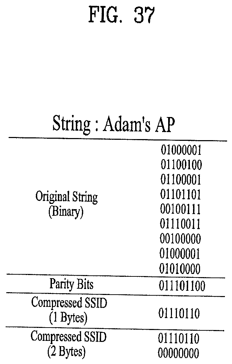

FIG. 37 is an explanatory diagram of generation of a compressed SSID according to a parity method. Assuming that an SSID is "Adam's AP" an example of generating a compressed SSID for each of a compressed SSID field of 1 byte and a compressed SSID field of 2 bytes is illustrated in FIG. 37.

In "Adam's AP", since the length of a character string is 9, if an SSID is encoded in UTF-8, the SSID corresponds to a 9-byte bit stream. The AP/STA may generate parity bits through the sum of bit streams for respective characters, i.e., an XOR operation of a bit unit. For example, the XOR bit operation is performed on the first character byte, i.e., 01000001, then the first bit of the parity bits, i.e., 0, is output. If the length of the compressed SSID is shorter than the length of a parity bit stream, the AP/STA may truncate 8 bits from the front. On the contrary, if the length of the compressed SSID is longer than the length of the parity bit stream, the AP/STA may pad the remaining bits with 0. The method of truncating or padding the bits is not limited thereto and various other methods such as padding of 1 may be used.

### (ii) Method of extracting bits per character

Since the MSB of UTF-8 is fixed to 0, the AP/STA may extract a predetermined number of bits from 7 bits except for the MSB. In addition, the AP/STA may adjust the length of the compressed SSID field by performing an arbitrary hash function (e.g., CRC-8, CRC-16, etc.) based on the extracted bits.

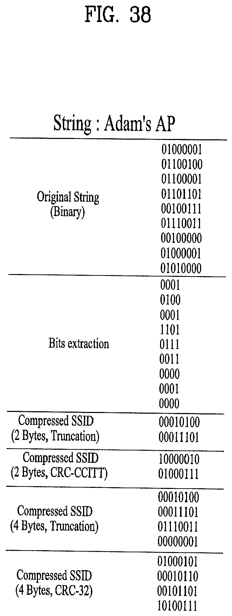

FIG. 38 is an explanatory diagram of generation of a compressed SSID according to a method of extracting bits per character.

Specifically, the case in which 4 LSBs are extracted per SSID character is illustrated in FIG. 38. The extracted bits are bits extracted per character. The AP/STA may re-extract the extracted bits by a predetermined length according to the length of the compressed SSID or apply an arbitrary hash function to the extracted bits. FIG. 38 exemplarily illustrates the case in which the compressed SSID is 2 bytes and 4 bytes.

Truncation is a method of truncating bits extracted by the length of the compressed SSID or padding arbitrary bits when the extracted bits are insufficient. CRC is the result of operation of a defined CRC polynomial. Although the operation of truncation is relatively simple, there is a disadvantage that two or more SSIDs having the same some parts may not be distinguished from the compressed SSID. CRC requires a more complicated operation relative to truncation. However, hardware burden is not large due to the characteristics of CRC and a collision probability that may occur in truncation is small. In addition to truncation and CRC, other hash functions may also be used.

### (iii) Method of extracting bits in descending/ascending order

The AP/STA may extract bits in descending/ascending order from the remaining bit stream except for fixed MSB 0. Although this method has an advantage that a certain portion of an SSID may be partially recovered to be the same as a complete SSID, when certain portions of the SSID are exactly the same as in Adam's API and Adam's AP2, there is a disadvantage that the two strings may not be distinguished.

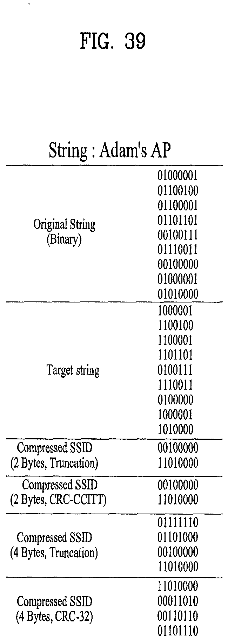

FIG. 39 is an explanatory diagram of generation of a compressed SSID according to a method of extracting bits in descending/ascending order. In FIG. 39, it is assumed that the length of the compressed SSID is 4 bytes and the same SSID as in FIGS. 37 and 38 is assumed.

The AP/STA may generate a target string by removing the MSB of each character and then generate the compressed SSID by truncating the target string or using a hash function.

If the length of the compressed SSID is 2 bytes, it is assumed that the last 2 bytes in the target string are used as the compressed SSID. Alternatively, a hash function such as CRC may be used.

If the length of the compressed SSID is 4 bytes, it is assumed that the last 4 bytes in the target string are used as the compressed SSID. Alternatively, a hash function such as CRC may be used.

Although the fixed MSB 0 has been excluded in the above description because it is assumed that the SSID is encoded in UTF-8, if other encoding methods are used, the MSB may not be excluded to generate the compressed SSID.

### (2) 2 bytes or more per character UTF-8

Although some devices do not support UTF-8 of more than 2 bytes, in principle, UTF-8 may represent a single character by up to 4 bytes. Korean, Japanese, or Chinese characters or many characters express one character by two or more bytes. In this case, one character is present within the range of 0000000-10FFFF in hexadecimal.

If one character is 2 bytes, 3 bytes, and 4 bytes, the character is represented as [110xxxxx 10xxxxxx], [1110xxxx 10xxxxxx 10xxxxxx], and [11110xxx 10xxxxxx 10xxxxxx 10xxxxxx], respectively.

As in the case in which one character is 1 byte, the AP/STA may generate the compressed SSID by excluding the fixed MSBs of each byte or after including all the MSBs.

### (3) Other encoding methods

In the current IEEE 802.11 specification, when a bit indicating UTF-8 is 0, a specific SSID encoding method is not enforced. In this case, it is difficult to apply the method of generating parity bits per character or extracting bits per character among the aforementioned methods. Alternatively, the AP/STA may truncate 1 byte or a certain length from the SSID and then equally apply the abovementioned methods.

### - Implementation example based on Proposal 3

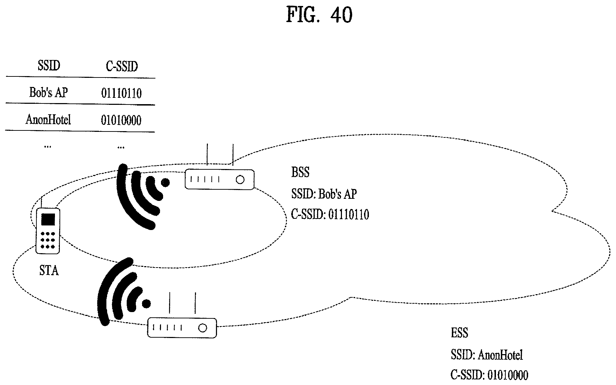

FIG. 40 illustrates an example of a WUR discovery procedure between an AP, a BSS, and an ESS using an SSID compression scheme.

Assume a scenario in which an STA desires to be associated with a specific service set in an environment in which BSSs or ESSs are densely present. In the case of an ESS provided by a hotel or an airport or an ESS provided by a communication company, SSID information is required because a BSSID alone may not determine whether an AP belongs to a service set desired by the STA. For example, when the STA desires to access an AP of a mobile communication provider called XYZ, it is difficult to determine whether the AP is an AP operated by XYZ only by the BSSID or a MAC address of the AP. However, in general, since all SSIDs of APs operated by XYZ are set to the same value, for example, a character string such as the name of a mobile communication operator, the STA may select an AP with which the STA is to be associated based on the SSID.

However, since an SSID string is very long, it is difficult to transmit the entire SSID through the WUR discovery frame. Therefore, the SSID (or partial SSID) compressed through the SSID compression method proposed above may be transmitted through the WUR discovery frame. The STA may distinguish the SSID or the AP through the compressed/partial SSID included in the WUR discovery frame. For example, assuming that the STA desires roaming in a hotel ESS with which the STA has originally been associated, the STA may preferentially attempt to perform an association process with a BSS that transmits the same compressed SSID.

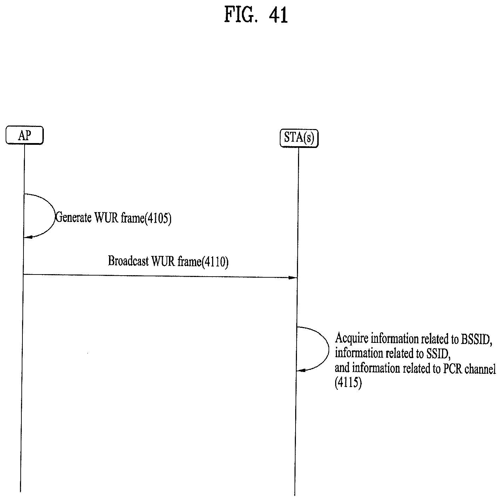

FIG. 41 is a flowchart of a WUR frame transmission and reception method according to an embodiment of the present disclosure.

Referring to FIG. 41, an AP generates a WUR frame including a frame control field, an address field, a Type Dependent (TD) control field, and a frame body (4105). The WUR frame may serve to support AP discovery of an STA operating in a WUR mode. The WUR frame may be a WUR discovery frame. The AP may include information related to a Basic Service Set ID (BSSID), information related to a Service Set Identifier (SSID), and information related to a Primary Connectivity Radio (PCR) channel in the WUR frame. The information about the BSSID may be obtained by compressing the entire BSSID of the AP. A first part and a second part of the compressed BSSID may be set in the address field and the TD control field, respectively. The information related to the SSID may be obtained by compressing the entire SSID of the AP. The compressed SSID may be set in the frame body. The information related to the PCR channel is included in the frame body and may indicate a channel on which the AP operates in the PCR.

The AP transmits the generated WUR frame in a broadcast manner (4110). The STA receives the WUR frame.

If a type subfield included in the frame control field is set to a bit value 011, the STA may determine that the WUR frame is a WUR frame broadcasting information for AP discovery.

The STA may acquire the information related to the BSSID, the information related to the SSID, and the information related to the PCR channel from the WUR frame according to the determination that the WUR frame is a WUR frame that broadcasts the information for AP discovery (4115). The information related to the BSSID is obtained by compressing the entire BSSID of the AP and a first portion and a second portion of the compressed BSSID may be obtained from the address field and the TD control field, respectively. The information about the SSID is obtained by compressing the entire SSID of the AP and may be obtained from the frame body.

As an example, the information about the PCR channel may be a combination of spectrum location information and band location information. The spectral location information may be 1-bit information indicating any one of a 2.4 GHz spectrum and a 5 GHz spectrum and the band location information may indicate any one of bands included in the 2.4 GHz spectrum or the 5 GHz spectrum indicated by the spectrum location information.

As an example, the STA may perform scanning in a PCR based on the information related to the BSSID, the information related to the SSID, and the information related to the PCR channel. For example, the STA may perform scanning only on a specified channel based on the information related to the PCR channel.

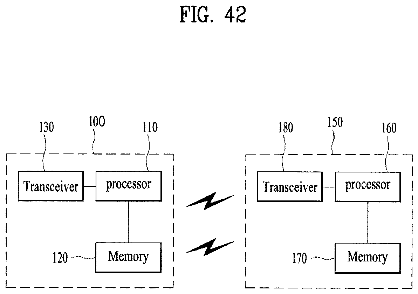

FIG. 42 is an explanatory diagram of an apparatus for implementing the above-described method.

A wireless apparatus 100 of FIG. 42 may correspond to the above-described specific STA and a wireless apparatus 850 of FIG. 42 may correspond to the above-described AP.

The STA 100 may include a processor 110, a memory 120, and a transceiver 130 and the AP 150 may include a processor 160, a memory 170, and a transceiver 180. The transceivers 130 and 180 may transmit/receive a wireless signal and may be implemented in a physical layer of IEEE 802.11/3GPP. The processors 110 and 160 are implemented in a physical layer and/or a MAC layer and are connected to the transceivers 130 and 180. The processors 110 and 160 may perform the above-mentioned UL MU scheduling procedure.

The processors 110 and 160 and/or the transceivers 130 and 180 may include an Application-Specific Integrated Circuit (ASIC), a chipset, a logical circuit, and/or a data processor. The memories 120 and 170 may include a Read-Only Memory (ROM), a Random Access Memory (RAM), a flash memory, a memory card, a storage medium, and/or a storage unit. If an embodiment is performed by software, the above-described method may be executed in the form of a module (e.g., a process or a function) performing the above-described function. The module may be stored in the memories 120 and 170 and executed by the processors 110 and 160. The memories 120 and 170 may be located at the interior or exterior of the processors 110 and 160 and may be connected to the processors 110 and 160 via known means.

The transceiver 130 of the STA may include a transmitter (not shown) and a receiver (not shown). The receiver of the STA may include a primary connectivity receiver for receiving a PCR (e.g., WLAN such as IEEE 802.11 a/b/g/n/ac/ax) signal and a WUR receiver for receiving a WUR signal. The transmitter of the STA may include a PCR transmitter for transmitting a PCR signal.

The transceiver 180 of the AP may include a transmitter (not shown) and a receiver (not shown). The transmitter of the AP may correspond to an OFDM transmitter. The AP may transmit a WUR payload by an OOK scheme by reusing an OFDM transmitter. For example, the AP may modulate the WUR payload by an OOK scheme through an OFDM transmitter as described above.

The detailed description of the exemplary embodiments of the present disclosure has been given to enable those skilled in the art to implement and practice the disclosure. Although the disclosure has been described with reference to the preferred embodiments, those skilled in the art will appreciate that various modifications and variations can be made in the present disclosure without departing from the scope of the disclosure described in the appended claims. Accordingly, the disclosure should not be limited to the specific embodiments described herein, but should be accorded the broadest scope consistent with the principles and novel features disclosed herein. Thereby, the invention is defined by the appended claims.

### Industrial Applicability

The present disclosure may be applied to various wireless communication systems including an IEEE 802.11 system.

## Claims

1. A method of receiving a Wake-Up Radio, WUR, frame by a station, STA, in a Wireless Local Area Network, WLAN, the method comprising:
receiving a WUR frame including a frame control field, an address field, a Type Dependent, TD, control field, and a frame body;
obtaining, from the WUR frame, information related to a Basic Service Set identifier, BSSID, information related to a Service Set identifier, SSID, and information related to a Primary Connectivity Radio, PCR, channel, upon determining that the WUR frame is a WUR frame broadcasting information for Access Point, AP, discovery; and
performing scanning in a PCR for the AP discovery based on the information related to the BSSID, the information related to the SSID, and the information related to the PCR channel,
wherein the information related to the BSSID is a partial BSSID of an entire BSSID of the AP, and a first part and a second part of the partial BSSID are obtained from the address field and the TD control field, respectively, and
the information related to the SSID is a partial SSID of an entire SSID of the AP and the partial SSID is obtained from the frame body.

2. The method of claim 1, wherein the information related to the PCR channel is included in the frame body and indicates a channel on which the AP operates in a PCR.

3. The method of claim 2,
wherein the information related to the PCR channel is a combination of spectrum location information and band location information,
the spectrum location information is 1-bit information indicating any one of a 2.4 GHz spectrum and a 5 GHz spectrum, and
the band location information indicates any one band among bands included in the 2.4 GHz spectrum or the 5 GHz spectrum, indicated by the spectrum location information.

4. The method of claim 1,
wherein the STA performs scanning only on a specified channel based on the information related to the PCR channel.

5. The method of claim 1,
wherein, based on a type subfield included in the frame control field, set to a bit value of 011, the STA determines that the WUR frame is a WUR frame broadcasting the information for AP discovery.

6. The method of claim 1,
wherein the WUR frame is a WUR discovery frame.

7. A method of transmitting a Wake-Up Radio, WUR, frame by an Access Point, AP, in a Wireless Local Area Network, WLAN, the method comprising:
generating a WUR frame including a frame control field, an address field, a Type Dependent, TD, control field, and a frame body; and
transmitting the WUR frame in a broadcast manner,
wherein the WUR frame serves to support AP discovery of a station, STA, operating in a WUR mode and the AP provides the STA with information related to a Basic Service Set identifier, BSSID, information related to a Service Set identifier, SSID, and information related to a Primary Connectivity Radio, PCR, channel through the WUR frame,
the information related to the BSSID is a partial BSSID of an entire BSSID of the AP, and a first part and a second part of the partial BSSID are set in the address field and the TD control field, respectively, and
the information related to the SSID is a partial SSID of an entire SSID of the AP and the partial SSID is set in the frame body.

8. The method of claim 7, wherein the information related to the PCR channel is included in the frame body and indicates a channel on which the AP operates in a PCR.

9. The method of claim 8,
wherein the information related to the PCR channel is a combination of spectrum location information and band location information,
the spectrum location information is 1-bit information indicating any one of a 2.4 GHz spectrum and a 5 GHz spectrum, and
the band location information indicates any one band among bands included in the 2.4 GHz spectrum or the 5 GHz spectrum, indicated by the spectrum location information.

10. The method of claim 7,
wherein the AP sets a type subfield included in the frame control field to a bit value of 011.

11. The method of claim 7,
wherein the WUR frame is a WUR discovery frame.

12. A station, STA, (100) for receiving a Wake-Up Radio, WUR, frame, the STA (100) comprising:
a receiver (130); and
a processor (110) coupled to the receiver,
wherein the receiver is configured to receive a WUR frame including a frame control field, an address field, a Type Dependent, TD, control field, and a frame body,
wherein the processor is configured to:
obtain, from the WUR frame, information related to a Basic Service Set identifier, BSSID, information related to a Service Set identifier, SSID, and information related to a Primary Connectivity Radio, PCR, channel, upon determining that the WUR frame is a WUR frame broadcasting information for an Access Point, AP, discovery; and
perform scanning in a PCR for the AP discovery based on the information related to the BSSID, the information related to the SSID, and the information related to the PCR channel,
wherein the information related to the BSSID is a partial BSSID of an entire BSSID of an AP, and a first part and a second part of the partial BSSID are obtained from the address field and the TD control field, respectively, and
the information related to the SSID is a partial SSID of an entire SSID of the AP and the partial SSID is obtained from the frame body.

13. A computer-readable recording medium comprising instructions which, when executed by the station of claim 12, causes the station to carry out the method of claim 1.

## Patentansprüche

1. Verfahren zum Empfangen eines Wake-Up-Radio-, WUR-, Rahmens durch eine Station, STA, in einem drahtlosen lokalen Bereichs-Netzwerk, WLAN, wobei das Verfahren umfasst:
Empfangen eines WUR-Rahmens, der ein Rahmensteuerfeld, ein Adressfeld, ein typabhängiges, TD-, Steuerfeld und einen Rahmenkörper enthält;
Erhalten einer Information aus dem WUR-Rahmen, die sich auf einen Basic Service Set Identifier, BSSID, eine Information, die sich auf einen Service Set Identifier, SSID, bezieht, und eine Information, die sich auf einen Primary Connectivity Radio, PCR, Kanal bezieht, wenn festgestellt wird, dass der WUR-Rahmen ein WUR-Rahmen ist, der eine Information für die Erkennung eines Access Point, AP, broadcastet; und
Durchführen eines Scannens in einem PCR für die AP-Erkennung auf der Grundlage der Information, die sich auf den BSSID bezieht, der Information, die sich auf den SSID bezieht und der Information, die sich auf den PCR-Kanal bezieht,
wobei die auf den BSSID bezogene Information ein Teil-BSSID eines vollständigen BSSID des AP ist und ein erster Teil und ein zweiter Teil des Teil-BSSID aus dem Adressfeld bzw. dem TD-Steuerfeld erhalten werden, und
die auf den SSID bezogene Information ein Teil-SSID eines vollständigen SSID des AP ist und der Teil-SSID aus dem Rahmenkörper erhalten wird.

2. Verfahren nach Anspruch 1, wobei die auf den PCR-Kanal bezogene Information in dem Rahmenkörper enthalten ist und einen Kanal angibt, auf dem der AP in einem PCR arbeitet.

3. Verfahren nach Anspruch 2,
wobei die auf den PCR-Kanal bezogene Information eine Kombination aus einer Spektrumsstandortinformation und einer Bandstandortinformation ist,
die Spektrumsstandortinformation eine 1-Bit-Information ist, die entweder ein 2,4-GHz-Spektrum oder ein 5-GHz-Spektrum angibt, und
die Bandstandortinformation ein beliebiges Band aus Bändern, die im 2,4-GHz-Spektrum oder im 5-GHz-Spektrum enthalten sind, angibt, das durch die Spektrumsstandortinformation angegeben wird.

4. Verfahren nach Anspruch 1,
wobei die STA eine Abtastung nur auf einem bestimmten Kanal auf der Grundlage der auf den PCR-Kanal bezogenen Information durchführt.

5. Verfahren nach Anspruch 1,
wobei die STA auf der Grundlage eines im Rahmensteuerfeld enthaltenen Typ-Unterfeldes, das auf einen Bitwert von 011 gesetzt ist, bestimmt, dass der WUR-Rahmen ein WUR-Rahmen ist, der die Information für die AP-Erkennung broadcastet.

6. Verfahren nach Anspruch 1,
wobei der WUR-Rahmen ein WUR-Erkennungsrahmen ist.

7. Verfahren zum Senden eines Wake-Up-Radio-, WUR-, Rahmens durch einen Access Point, AP, in einem drahtlosen lokalen Bereichs-Netzwerk, WLAN, wobei das Verfahren umfasst:
Erzeugen eines WUR-Rahmens, der ein Rahmensteuerfeld, ein Adressfeld, ein typabhängiges, TD-, Steuerfeld und einen Rahmenkörper enthält; und
Senden des WUR-Rahmens im Broadcast-Verfahren,
wobei der WUR-Rahmen dazu dient, die AP-Erkennung einer Station, STA, zu unterstützen, die in einem WUR-Modus arbeitet, und der AP die STA mit einer Information versorgt, die sich auf einen Basic Service Set Identifier, BSSID, eine Information, die sich auf einen Service Set Identifier, SSID, bezieht, und eine Information, die sich auf einen Primary Connectivity Radio, PCR, Kanal durch den WUR-Rahmen bezieht,
wobei die auf den BSSID bezogene Information ein Teil-BSSID eines vollständigen BSSID des AP ist und ein erster Teil und ein zweiter Teil des Teil-BSSID im Adressfeld bzw. im TD-Steuerfeld gesetzt werden, und
die auf den SSID bezogene Information ein Teil-SSID eines vollständigen SSID des AP ist und der Teil-SSID im Rahmenkörper gesetzt wird.

8. Verfahren nach Anspruch 7, wobei die auf den PCR-Kanal bezogene Information in dem Rahmenkörper enthalten ist und einen Kanal angibt, auf dem der AP in einem PCR arbeitet.

9. Verfahren nach Anspruch 8,
wobei die auf den PCR-Kanal bezogene Information eine Kombination aus einer Spektrumsstandortinformation und einer Bandstandortinformation ist,
die Spektrumsstandortinformation eine 1-Bit-Information ist, die entweder ein 2,4-GHz-Spektrum oder ein 5-GHz-Spektrum angibt, und
die Bandstandortinformation ein beliebiges Band aus Bändern, die im 2,4-GHz-Spektrum oder im 5-GHz-Spektrum enthalten sind, angibt, das durch die Spektrumsstandortinformation angegeben wird.

10. Verfahren nach Anspruch 7,
wobei der AP ein im Rahmensteuerfeld enthaltenes Typ-Unterfeld auf einen Bitwert von 011 setzt.

11. Verfahren nach Anspruch 7,
wobei der WUR-Rahmen ein WUR-Erkennungsrahmen ist.

12. Station, STA, (100) zum Empfangen eines Wake-Up Radio-, WUR-, Rahmens, wobei die STA (100) umfasst:
einen Empfänger (130); und
einen Prozessor (110), der mit dem Empfänger gekoppelt ist,
wobei der Empfänger konfiguriert ist zum Empfangen eines WUR-Rahmens, der ein Rahmensteuerfeld, ein Adressfeld, ein typabhängiges, TD-, Steuerfeld und einen Rahmenkörper enthält,
wobei der Prozessor konfiguriert ist zum:
Erhalten einer Information aus dem WUR-Rahmen, die sich auf einen Basic Service Set Identifier, BSSID, eine Information, die sich auf einen Service Set Identifier, SSID, bezieht, und eine Information, die sich auf einen Primary Connectivity Radio, PCR, Kanal bezieht, wenn festgestellt wird, dass der WUR-Rahmen ein WUR-Rahmen ist, der eine Information für die Erkennung eines Access Point, AP, broadcastet; und
Durchführen eines Scannens in einem PCR für die AP-Erkennung auf der Grundlage der Information, die sich auf den BSSID bezieht, der Information, die sich auf den SSID bezieht und der Information, die sich auf den PCR-Kanal bezieht,
wobei die auf den BSSID bezogene Information ein Teil-BSSID eines vollständigen BSSID des AP ist und ein erster Teil und ein zweiter Teil des Teil-BSSID aus dem Adressfeld bzw. dem TD-Steuerfeld erhalten werden, und
die auf den SSID bezogene Information ein Teil-SSID eines vollständigen SSID des AP ist und der Teil-SSID aus dem Rahmenkörper erhalten wird.

13. Computerlesbares Speichermedium, das Anweisungen enthält, die, wenn sie von der Station nach Anspruch 12 ausgeführt werden, die Station veranlassen, das Verfahren nach Anspruch 1 auszuführen.

## Revendications

1. Procédé de réception d'une trame radio réveil, WUR, par une station, STA, dans un réseau local sans fil, WLAN, le procédé consistant à :
recevoir une trame WUR comprenant un champ de contrôle de trame, un champ d'adresse, un champ de contrôle dépendant du type, TD, et un corps de trame ;
obtenir, à partir de la trame WUR, des informations concernant un identifiant d'ensemble de services de base, BSSID, concernant un identifiant d'ensemble de services, SSID, et des informations concernant un canal de radio à connectivité primaire, PCR, dès qu'il est déterminé que la trame WUR est une information de diffusion de trame WUR pour la découverte de point d'accès, AP ; et
effectuer le balayage dans une PCR pour la découverte d'AP sur la base des informations concernant le BSSID, des informations concernant le SSID et des informations concernant le canal PCR,
dans lequel les informations concernant le BSSID est un BSSID partiel d'un BSSID entier de l'AP, et une première partie et une seconde partie du BSSID partiel sont obtenues à partir du champ d'adresse et du champ contrôle TD, respectivement, et
les informations concernant le SSID sont un SSID partiel et un SSID entier de l'AP et le SSID partiel est obtenu à partir du corps de trame.

2. Procédé selon la revendication 1, dans lequel les informations concernant le canal PCR sont comprises dans le corps de trame et indiquent un canal sur lequel l'AP fonctionne dans une PCR.

3. Procédé selon la revendication 2,
dans lequel les informations concernant le canal PCR sont une combinaison d'informations d'emplacement de spectre et des informations d'emplacement de bande,
les informations d'emplacement de spectre sont des informations de 1 bit indiquant l'un quelconque spectre parmi un spectre de 2,4 GHz et un spectre de 5 Ghz, et
les informations d'emplacement de bande indiquent une quelconque bande parmi des bandes comprises dans le spectre de 2,4 GHz ou dans le spectre 5 Ghz, indiqués par les informations d'emplacement de spectre.

4. Procédé selon la revendication 1,
dans lequel la STA effectue le balayage uniquement sur un canal spécifié sur la base des informations concernant le canal PCR.

5. Procédé selon la revendication 1,
dans lequel, sur la base d'un sous-champ type compris dans le champ de contrôle de trame, fixé à une valeur de bit de 011, la STA détermine que la trame WUR est une trame WUR diffusant les informations pour la découverte d'AP.

6. Procédé selon la revendication 1,
dans lequel la trame WUR est une trame de découverte de WUR.

7. Procédé de transmission d'une trame radio réveil, WUR, par une point d'accès, AP, dans un réseau local sans fil, WLAN, le procédé consistant à :
générer une trame WUR comprenant un champ de contrôle de trame, un champ d'adresse, un champ de contrôle dépendant du type, TD, et un corps de trame ; et
transmettre la trame WUR par diffusion,
dans lequel la trame WUR sert à prendre en charge la découverte AP d'une station, STA, fonctionnant dans un mode WUR et l'AP fournit à la STA des informations concernant une information d'identifiant d'ensemble de services de base, BSSID, concernant un identifiant d'ensemble de services, SSID, et des informations concernant un canal de radio à connectivité primaire, PCR, par la trame WUR,
les informations concernant le BSSID est un BSSID partiel d'un BSSID entier de l'AP, et une première partie et une seconde partie du BSSID partiel sont définies dans le champ d'adresse et du champ de contrôle TD, respectivement, et
les informations concernant le SSID sont un SSID partiel et un SSID entier de l'AP et le SSID partiel est défini dans le corps de trame.

8. Procédé selon la revendication 7, dans lequel les informations concernant le canal PCR sont comprises dans le corps de trame et indiquent un canal sur lequel l'AP fonctionne dans une PCR.

9. Procédé selon la revendication 8,
dans lequel les informations concernant le canal PCR sont une combinaison d'informations d'emplacement de spectre et des informations d'emplacement de bande,
les informations d'emplacement de spectre sont des informations de 1 bit indiquant l'un quelconque spectre parmi un spectre de 2,4 GHz et un spectre de 5 Ghz, et
les informations d'emplacement de bande indiquent une quelconque bande parmi des bandes comprises dans le spectre de 2,4 GHz ou dans le spectre 5 Ghz, indiqués par les informations d'emplacement de spectre.

10. Procédé selon la revendication 7,
dans lequel l'AP définit un sous-champ type compris dans le champ de contrôle de trame à une valeur de bit de 011.

11. Procédé selon la revendication 7,
dans lequel la trame WUR est une trame de découverte de WUR.

12. Station, STA, (100) destinée à recevoir une trame radio réveil, WUR, la STA (100) comprenant :
un récepteur (130) ; et
un processeur (110) connecté au récepteur,
dans lequel le récepteur est configuré pour recevoir une trame WUR comprenant un champ de contrôle de trame, un champ d'adresse, un champ de contrôle dépendant du type, TD, et un corps de trame,
dans lequel le processeur est configuré pour :
obtenir, à partir de trame WUR, des informations concernant une information d'identifiant d'ensemble de services de base, BSSID, concernant un identifiant d'ensemble de services, SSID, et des informations concernant un canal de radio à connectivité primaire, PCR, dès qu'il est déterminé que la trame WUR est une information de diffusion de trame WUR pour une découverte de point d'accès, AP ; et
effectuer le balayage dans une PCR pour la découverte AP sur la base des informations concernant le BSSID, des informations concernant le SSID et des informations concernant le canal PCR,
dans lequel les informations concernant le BSSID est un BSSID partiel d'un BSSID entier de l'AP, et une première partie et une seconde partie du BSSID partiel sont obtenues à partir du champ d'adresse et du champ de contrôle TD, respectivement, et
les informations concernant le SSID sont un SSID partiel et un SSID entier de l'AP et le SSID partiel est obtenu à partir du corps de trame.

13. Support lisible par ordinateur comprenant des instructions qui, lorsqu'elles sont exécutées par la station de la revendication 12, amènent la station à exécuter le procédé de la revendication 1.
